(19) Europäisches Patentamt
European Patent Office
Office européen des brevets

(11) **EP 4 380 069 A1**

(12) **EUROPEAN PATENT APPLICATION**
published in accordance with Art. 153(4) EPC

(43) Date of publication:
**05.06.2024 Bulletin 2024/23**

(21) Application number: **22861768.4**

(22) Date of filing: **26.08.2022**

(51) International Patent Classification (IPC):
$H04B\ 7/06$ (2006.01)    $H04B\ 7/0452$ (2017.01)
$H04W\ 74/00$ (2009.01)    $H04W\ 56/00$ (2009.01)
$H04W\ 48/10$ (2009.01)    $H04J\ 11/00$ (2006.01)

(52) Cooperative Patent Classification (CPC):
H04B 7/0452; H04B 7/06; H04J 11/00;
H04W 48/10; H04W 56/00; H04W 74/00

(86) International application number:
**PCT/KR2022/012841**

(87) International publication number:
**WO 2023/027560 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2021 KR 20210114195
06.05.2022 KR 20220056254**

(71) Applicant: **Samsung Electronics Co., Ltd.
Suwon-si, Gyeonggi-do 16677 (KR)**

(72) Inventors:
• **KIM, Hanjin**
**Suwon-si Gyeonggi-do 16677 (KR)**
• **LEE, Seunghyun**
**Suwon-si Gyeonggi-do 16677 (KR)**
• **LEE, Juho**
**Suwon-si Gyeonggi-do 16677 (KR)**
• **KIM, Donggu**
**Suwon-si Gyeonggi-do 16677 (KR)**
• **JUNG, Jungsoo**
**Suwon-si Gyeonggi-do 16677 (KR)**

(74) Representative: **HGF
HGF Limited
1 City Walk
Leeds LS11 9DX (GB)**

(54) **BEAM MANAGEMENT METHOD AND DEVICE IN WIRELESS COMMUNICATION SYSTEM**

(57) A method of supporting beam forming by a base station in a wireless communication system according to various embodiments of the present disclosure may comprise the steps of: mapping reconfiguration intelligent surface (RIS) pattern information and a synchronization signal block (SSB); transmitting the mapped SSB to an RIS controller; and receiving a random access preamble for a terminal from the RIS controller.

FIG. 6

EP 4 380 069 A1

**Description**

[Technical Field]

The disclosure relates to a method and apparatus for managing a beam in a wireless communication system.

[Background Art]

In order to meet the growing demand for wireless data traffic after the commercialization of 4th-generation (4G) communication systems, efforts have been made to develop improved 5th-generation (5G) communication systems or pre-5G communication systems. For this reason, a 5G communication system or a pre-5G communication system is referred to as a beyond 4G network communication system or a post-LTE system.

To achieve high data rates, implementation of a 5G communication system in an ultra-high frequency (mmWave) band (e.g., a 60GHz band) is under consideration. To mitigate the pathloss of radio waves in the ultra-high frequency band and increase the propagation distance of radio waves, beamforming, massive multiple-input multiple-output (massive MIMO), full dimensional MIMO (FD-MIMO), array antenna, analog beamforming, and large-scale antenna techniques have been discussed for the 5G communication system.

Further, to improve a system network, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed for the 5G communication system.

Besides, advanced coding modulation (ACM) schemes such as hybrid FSK and QAM modulation (FQAM) and sliding window superposition coding (SWSC) and advanced access techniques such as filter bank multi carrier (FBMC), non-orthogonal multiple access (NOMA), and sparse code multiple access (SCMA) are being developed for the 5G system.

The Internet is evolving from a human-centered connection network where humans create and consume information to an Internet of things (IoT) where information is exchanged and processed among distributed components such as objects. Internet of Everything (IoE) technology, which combines IoT technology with big data processing technology through connections to a cloud server, is also emerging. To realize IoT, technology elements such as sensing technology, wired and wireless communication and network infrastructure, service interface technology, and security technology are required, and technologies such as sensor network, machine to machine (M2M) communication, and machine type communication (MTC) have recently been studied to connect things. In the IoT environment, intelligent Internet technology (IT) services may be provided, which create new values for human life by collecting and analyzing data generated by connected objects. IoT may find its applications in the fields of smart homes, smart buildings, smart cities, smart or connected cars, smart grids, healthcare, smart appliances, advanced medical services, and so on through convergence and merging between the existing information technology (IT) and various industries.

Therefore, various attempts have been made to apply a 5G communication system to an IoT network. For example, 5G communications such as sensor networks, M2M communication, and MTC are implemented by techniques such as beamforming, MIMO, and array antennas. The application of a cloud RAN as the afore-described big data processing technology may also be an example of the convergence between 5G and IoT technologies.

Along with the recent development of communication systems, research has been conducted on a reconfiguration intelligent surface (RIS) in 5G-based wireless communication systems.

The RIS may form a reflection pattern by combining the phases and/or amplitudes of respective reflecting elements (REs) included in the RIS and reflect a beam incident on the RIS in a desired direction according to the reflection pattern.

There is a need for a method of selecting an appropriate beam and reflection pattern from among a plurality of beams and a plurality of reflection patterns to eliminate a shadowed area in an environment where a base station supports a plurality of beams and an RIS supports a plurality of reflection patterns.

[Detailed Description of the Invention]

[Technical Problem]

An aspect of the disclosure is to provide a method and apparatus for managing a beam in a wireless communication system.

An aspect of the disclosure is to provide a method and apparatus for efficiently transmitting and receiving signals to and from a user equipment (UE) in a shadowed area through beamforming by a base station (BS) in a wireless communication system.

An aspect of the disclosure is to provide a method and apparatus for efficiently performing communication between a BS and a UE using a reconfiguration intelligent surface (RIS) in a wireless communication system.

[Technical Solution]

According to various embodiments of the disclosure, a method of supporting beamforming by a base station (BS) in a wireless communication system includes mapping a reconfiguration intelligent surface (RIS) pattern value to a synchronization signal block (SSB), transmitting the mapped SSB to an RIS controller, and receiving a random access preamble of a user equipment (UE) from the RIS controller.

According to various embodiments of the disclosure, a method of supporting beamforming by an RIS controller in a wireless communication system includes receiving a first SSB to which an RIS pattern value is mapped from a BS, configuring a phase value of an RIS element of an RIS based on the RIS pattern value, and transmitting the first SSB to a UE based on the phase value of the RIS element.

[Advantageous Effects]

According to various embodiments of the disclosure, a base station (BS) may efficiently communicate with user equipments (UEs) using an RIS.

According to various embodiments of the disclosure, a BS may efficiently communicate with a UE located in a shadowed area.

The effects of the disclosure are not limited to those mentioned above, and other effects not mentioned will be apparent to those skilled in the art from the following description.

[Brief Description of Drawings]

FIG. 1 is a diagram illustrating a time-frequency domain structure in LTE according to various embodiments of the disclosure.

FIG. 2 is a diagram illustrating a downlink control channel in LTE according to various embodiments of the disclosure.

FIG. 3 is a diagram illustrating transmission resources of a downlink control channel in 5G according to various embodiments of the disclosure.

FIG. 4 is a diagram illustrating an exemplary configuration for a control region in 5G according to various embodiments of the disclosure.

FIG. 5 is a diagram illustrating an exemplary configuration for a downlink RB structure in 5G according to various embodiments of the disclosure.

FIG. 6 is a diagram schematically illustrating a structure of a wireless communication system including an RIS according to various embodiments of the disclosure.

FIG. 7 is a diagram illustrating SSBs that user equipments (UEs) at various locations use to perform a beam establishment procedure with a base station (BS) in a wireless communication system according to various embodiments of the disclosure.

FIG. 8 is a diagram illustrating SSBs that UEs at various locations use to perform a beam establishment procedure with a BS in a wireless communication system according to various embodiments of the disclosure.

FIG. 9 is a diagram illustrating SSBs that UEs at various locations use to perform a beam establishment procedure with a BS in a wireless communication system according to various embodiments of the disclosure.

FIG. 10 is a diagram illustrating SSBs that UEs at various locations use to perform an RACH procedure with a BS in a wireless communication system according to various embodiments of the disclosure.

FIGS. 11A and 11B are flowcharts illustrating a method of performing a beam establishment procedure through an RIS by a BS and a UE according to various embodiments of the disclosure.

FIG. 12 is a flowchart illustrating a method of performing a beam establishment procedure through an SSB by a BS and a UE according to various embodiments of the disclosure.

FIG. 13 is a flowchart illustrating a sequence of operations for performing downlink beam sweeping by a BS after the BS is connected to a UE according to various embodiments of the disclosure.

FIG. 14 is a diagram illustrating an exemplary method of configuring a reference signal for a UE on downlink by a BS according to various embodiments of the disclosure.

FIG. 15 is a diagram illustrating an exemplary method of configuring a reference signal for a UE on downlink by a BS according to various embodiments of the disclosure.

FIG. 16 is a diagram illustrating an exemplary method of configuring a reference signal for a UE on downlink by a BS according to various embodiments of the disclosure.

FIG. 17 is a diagram illustrating an operation of reporting a reference signal on uplink by a UE according to various embodiments of the disclosure.

FIG. 18 is a flowchart illustrating a sequence of a process of indicating a BS beam and RIS RP information to a UE on downlink by a BS.

FIG. 19 is a diagram schematically illustrating a structure of a UE according to various embodiments of the disclosure.

FIG. 20 is a diagram schematically illustrating a structure of a BS according to various embodiments of the disclosure.

FIG. 21 is a diagram schematically illustrating a structure of an RIS according to various embodiments of the disclosure.

FIG. 22 is a diagram illustrating a channel model among a BS, an RIS, and a UE according to various embodiments of the disclosure.

FIG. 23 is a diagram illustrating an example of SINR CDF performance according to various embodiments of the disclosure.

FIG. 24 is a diagram illustrating another example of SINR CDF performance according to various embodiments of the disclosure.

FIG. 25 is a diagram illustrating another example of SINR CDF performance according to various embodiments of the disclosure.

[Mode for Carrying out the Invention]

Preferred embodiments of the disclosure will be described below in detail with reference to the accompanying drawings. It is to be noted that like reference numerals denote the same components in the drawings. Lest it should obscure the subject matter of the disclosure, a detailed description of a generally known function or structure of will be avoided.

In describing embodiments, a description of technical content which is well known in the technical field of the disclosure and not directly related to the disclosure will be avoided, lest it should obscure the subject matter of the disclosure. This is done to make the subject matter of the disclosure clearer without obscuring it by omitting an unnecessary description.

For the same reason, some components are shown as exaggerated, omitted, or schematic in the accompanying drawings. In addition, the size of each component does not fully reflect the actual size. In each drawing, the same reference numerals are assigned to the same or corresponding components.

The advantages and features of the disclosure and a method of achieving them will become apparent from reference to embodiments described below in detail in conjunction with the attached drawings. However, the disclosure may be implemented in various manners, not limited to the embodiments set forth herein. Rather, these embodiments are provided such that the disclosure is complete and thorough and its scope is fully conveyed to those skilled in the art, and the disclosure is only defined by the appended claims. The same reference numerals denote the same components throughout the specification.

It will be understood that each block of the flowchart illustrations and combinations of the flowchart illustrations can be implemented by computer program instructions. These computer program instructions may be loaded on a processor of a general purpose computer, special purpose computer, or other programmable data processing equipment, such that the instructions, which are executed through the processor of the computer or other programmable data processing equipment, create means for implementing the functions specified in the flowchart block(s). These computer program instructions may also be stored in a computer-usable or computer-readable memory that can direct the computer or other programmable data processing equipment to function in a particular manner, such that the instructions stored in the computer-usable or computer-readable memory produce an article of manufacture including instruction means which implement the function specified in the flowchart block(s). The computer program instructions may also be loaded onto the computer or other programmable data processing equipment to cause a series of operations to be performed on the computer or other programmable data processing equipment to produce a computer implemented process such that the instructions which are executed on the computer or other programmable equipment provide operations for implementing the functions specified in the flowchart block(s).

Furthermore, the respective block diagrams may illustrate parts of modules, segments, or codes including one or more executable instructions for performing specific logic function(s). Moreover, it should be noted that the functions of the blocks may be performed in a different order in several alternative implementations. For example, two successive blocks may be performed substantially at the same time, or may be performed in reverse order according to their functions.

The term 'unit' as used herein means, but is not limited to, a software or hardware component, such as a field programmable gate array (FPGA) or application specific integrated circuit (ASIC), which performs certain tasks. A 'unit' may be configured to reside on an addressable storage medium and configured to be executed on one or more processors. Thus, a 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided in the components and 'units' may be combined into fewer components and 'units' or further separated into additional components and 'units'. In addition, the components and 'units' may be implemented such that they are executed on one or more CPUs in a device or a secure multimedia card.

In embodiments of the disclosure, a base station, which is an entity to allocate resources to a terminal, may be at least one of a gNode B, a gNB, an eNode B, an eNB, a Node B, a BS, a radio access unit, a base station controller, or a network node. Further, the base station may be a network entity including at least one of an integrated access and backhaul (IAB)-donor that is a gNB providing network access to terminal(s) through a network of backhaul and access links or an IAB-node that is a radio access network (RAN) node supporting NR access link(s) to terminal(s) and supporting NR backhaul links to the IAB-donor or another IAB-node in an NR system. A UE may be wirelessly coupled to an IAB-donor through an IAB-node and transmit and receive data to and from the IAB-donor coupled to at least one IAB-node through a backhaul link.

Further, the terminal may include a user equipment (UE), a mobile station (MS), a cellular phone, a smart phone, a computer, or various devices capable of executing a communication function. In the disclosure, downlink (DL) is a wireless transmission path of a signal transmitted from a BS to a UE, and uplink (UL) is a wireless transmission path of a signal transmitted from a UE to a BS. While an LTE or LTE-A system may be described below as an example, embodiments of the disclosure are applicable to other communication systems having a similar technical background or channel structure. For example, the communication systems may include $5^{th}$ generation (5G) new radio (5G NR) developed after LTE-A, and 5G may be a concept encompassing legacy LTE, LTE-A, and other similar services in the following description. Further, the disclosure is also applicable to other communication systems through some modifications without greatly departing from the scope of the disclosure as judged by those skilled in the art.

As used in the following description, terms referring to signals, terms referring to channels, terms referring to control information, terms referring to network entities, terms referring to components of a device, and the like are exemplified for ease of description. In addition, as used in the following description, terms used to identify nodes, terms referring to messages, terms referring to interfaces between network entities, terms referring to various pieces of information, and so on are exemplified for ease of description. Therefore, the disclosure is not limited to the terms described herein, and other terms having equivalent technical meanings may be used.

In addition, although the disclosure describes various embodiments using terminology used in some communication standards (e.g., 3$^{rd}$ Generation Partnership Project (3GPP)), this is for illustrative purposes only. Various embodiments of the disclosure may be readily adapted and applied to other communication systems.

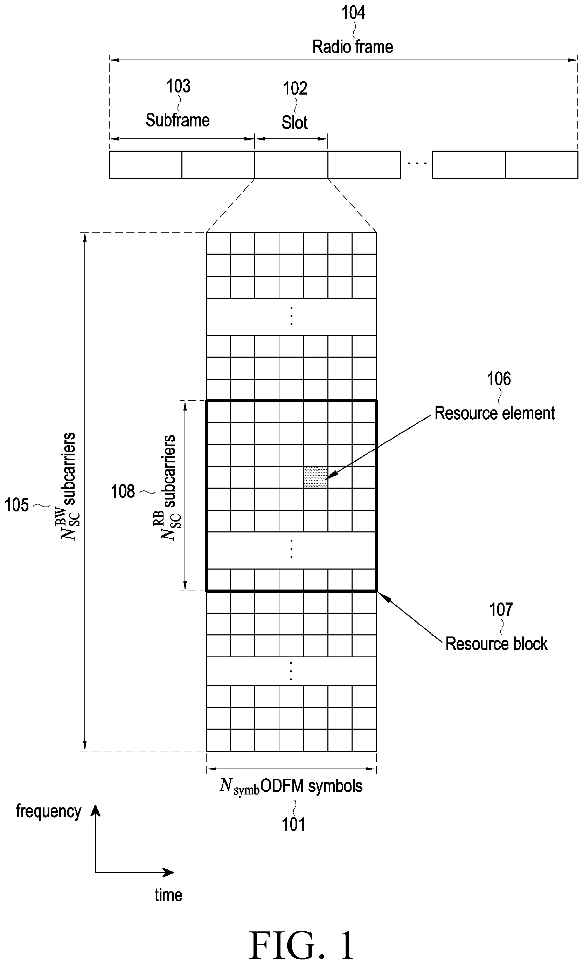

FIG. 1 is a diagram illustrating a time-frequency domain structure in an LTE system according to various embodiments of the disclosure.

Referring to FIG. 1, a horizontal axis represents a time domain, and a vertical axis represents a frequency domain. A minimum transmission unit in the time domain is an OFDM symbol, Nsymb OFDM symbols 101 form one slot 102, and two slots form one subframe 103. The length of a slot is 0.5ms, and the length of a subframe is 1.0ms. A radio frame 104 is a time-domain unit including 10 subframes. A minimum transmission unit in the frequency domain is a subcarrier, and a total system bandwidth includes NBW subcarriers 105. A basic resource unit in the time-frequency domain is a resource element (RE) 106, which may be represented by an OFDM symbol index and a subcarrier index. A resource block (RB) (or a physical resource block (PRB)) 107 is defined as Nsymb consecutive OFDM symbols 101 in the time domain by NRB consecutive subcarriers 108 in the frequency domain. Thus, one RB 108 includes Nsymb x NRB REs 106. Generally, a minimum data transmission unit is in RBs. In the LTE system, typically Nsymb = 7 and NRB = 12 where NBW and NRB are proportional to the bandwidth of a system transmission band.

Downlink control information (DCI) in LTE and LTE-A systems will be described below in detail.

In the LTE system, scheduling information for DL data or UL data is transmitted in DCI from a BS to a UE. Several DCI formats are defined and operated by applying the defined DCI formats depending on whether scheduling information is for UL data or DL data, whether DCI is compact DCI with a small size of control information, whether spatial multiplexing using multiple antennas is applied, whether DCI is for power control, and so on. For example, DCI format 1, which is scheduling control information for DL data, is configured to include at least the following control information.

- Resource allocation type 0/1 flag: Indicates whether the resource allocation scheme is type 0 or type 1. Type 0 applies a bitmap scheme to allocate resources on a resource block group (RBG) basis. In the LTE system, a basic scheduling unit is an RB represented by time and frequency-domain resources, and an RBG includes a plurality of RBs, which is a basic scheduling unit in type 0. Type 1 allows for allocation of a specific RB in an RBG.
- Resource block assignment: Indicates an RB assigned for data transmission. Represented resources are determined according to a system bandwidth and a resource allocation scheme.
- Modulation and coding scheme (MCS): Indicates a modulation scheme used for data transmission and the size of a transport block, which is data to be transmitted.

- HARQ process number: Indicates the number of an HARQ process.
- New data indicator: Indicates an HARQ initial transmission or an HARQ retransmission.
- Redundancy version: Indicates an HARQ redundancy version.
- Transmit power control (TPC) command for physical uplink control channel (PUCCH): Indicates a TPC command for a UL control channel, PUCCH.

The DCI is transmitted through a physical control channel, physical downlink control channel (PDCCH) after channel coding and modulation.

DCI message payload is attached with a cyclic redundancy check (CRC), which is scrambled with a radio network temporary identifier (RNTI) corresponding to the identity of a UE. Different RNTIs are used depending on the purposes of DCI messages, for example, UE-specific data transmission, a power control command, or a random access response. That is, the RNTI is not transmitted explicitly but is included in CRC calculation. When receiving a DCI message transmitted on a PDCCH, the UE may identify a CRC using an assigned RNTI, and when a CRC check result is correct, know that the message is directed to the UE.

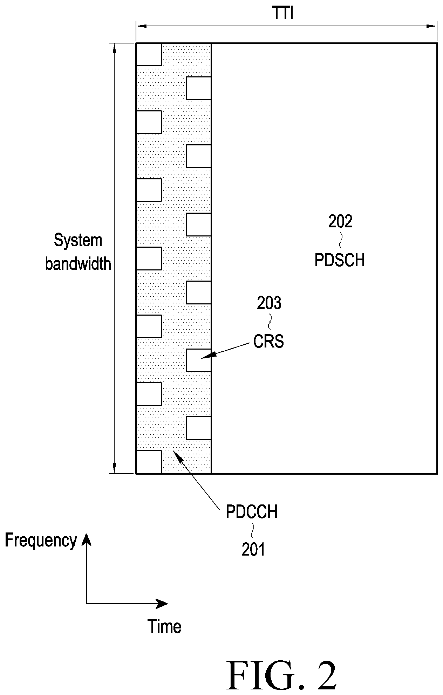

FIG. 2 is a diagram illustrating a DL control channel in LTE according to various embodiments of the disclosure. The DL control channel in LTE may be, for example, a PDCCH 201.

Referring to FIG. 2, the PDCCH 201 is time-multiplexed with a data transmission channel, physical downlink shared channel (PDSCH) 202 and transmitted across a total system bandwidth. The region of the PDCCH 201 is represented as the number of OFDM symbols and indicated to the UE by a control format indicator (CFI) transmitted on a physical control format indicator channel (PCFICH). As the PDCCH 201 is assigned to starting OFDM symbols of a subframe, it has the advantage of allowing the UE to decode a DL scheduling assignment as soon as possible, thereby reducing the decoding delay of a downlink shared channel (DL-SCH), that is, an overall DL transmission delay. Since one PDCCH carries one DCI message and multiple UEs may be scheduled simultaneously on DL and UL, multiple PDCCHs may be transmitted simultaneously within each cell. A cell-specific reference signal (CRS) 203 is used as a reference signal (RS) for decoding the PDCCH 201. The CRS 203 is transmitted across the total band in every subframe and subject to different scrambling and resource mapping depending on a cell identity. Since the CRS 203 is an RS common to all UEs, UE-specific beamforming may not be used. Therefore, a multi-antenna transmission scheme for the PDCCH in LTE is limited to open-loop transmit diversity. The number of ports for the CRS 203 is implicitly known to the UE from decoding of a physical broadcast channel (PBCH).

Resource allocation for the PDCCH 201 is based on a control-channel element (CCE), and one CCE includes 9 resource element groups (REGs), that is, a total of 36 REs. The number of CCEs required for a specific PDCCH 201 may be 1, 2, 4, or 8, depending on the channel coding rate of DCI message payload. These different numbers of CCEs are used to implement link adaptation of the PDCCH 201. Since the UE has to detect the signal without knowing information about the PDCCH 201, a search space representing a set of CCEs for blind decoding is defined in LTE. The search space includes a plurality of sets for each aggregation level (AL) of CCEs, which is not explicitly signaled but is implicitly defined by a function of the UE identity and a subframe number. In each subframe, the UE decodes the PDCCH 201 for every possible resource candidate that may be produced from CCEs within a configured search space, and processes information declared valid for the UE by a CRC check.

Search spaces are categorized into a UE-specific search space and a common search space. A certain group of UEs or all UEs may monitor the search space of the PDCCH 201 to receive cell-common control information such as dynamic scheduling of system information or a paging message. For example, scheduling allocation information for a DL-SCH for transmission of system information block (SIB)-1 including cell operator information may be received by monitoring a common search space of the PDCCH 201.

In LTE, an entire PDCCH region includes a set of CCEs in a logical area, and there exists a search space including a set of CCEs. The search space is divided into a common search space and a UE-specific search space, and the search space of the LTE PDCCH is defined as follows in the 3GPP communication standard specification TS 36.213.

The set of PDCCH candidates to monitor are defined in terms of search spaces, where a search space $S_k^{(L)}$ at aggregat ion level $L \in \{1,2,4,8\}$ is defined by a set of . PDCCH candidates. For each serving cell on which PDCCH is monitored, the CCEs corresponding to PDCCH catididate $m$ of the search space $S_k^{(L)}$ are given by

$$L \left\{ (Y_k + m') \bmod \left\lfloor N_{CCE,k} / L \right\rfloor \right\} + i$$

where $Y_k$ is defined below, $i = 0,\cdots,L\text{-}1$. For the common search space $m'=m$. For the PDCCH UE specific search space, for the serving cell on which PDCCH is monitored, if the monitoring UE is configured with carrier indicator field then $m'=m+M^{(L)}\cdot n_{CI}$ where $n_{CI}$ is the carrier indicator field value, else if the monitoring UE is not configured with carrier indicator field then $m'=m$, where $m = 0,\cdots,M^{(L)}\text{-}1$. $M^{(L)}$ is the number of PDCCH candidates to monitor in the given search space.

Note that the carrier indicator field value is the same as *ServCellIndex*

For the common search spaces, $Y_k$, is set to 0 for the two aggregation levels $L$=4 and $L$=8.

For the UE-specific search space $S_k^{(L)}$ at aggregation level $L$, the variable $Y_k$ is defined by

$$Y_k = \left(A\cdot Y_{k-1}\right)\bmod D$$

where $Y_{-1}=n_{RNTI} \neq 0$, $A$ = 39827, $D$=65537 and $k=\left\lfloor n_s/2 \right\rfloor$, $n_s$ is the slot number within a radio frame.

The RNTI value used for $n_{RNTI}$ is defined in subclause 7.1 in downlink and subclause 8 in uplink.

According to the definition of the search space for the PDCCH described above, the UE-specific search space is not explicitly signaled, but is implicitly defined as a function of a UE identity and a subframe number. In other words, the UE-specific search space may change depending on a subframe number, which means that it may change over time and thus solves the problem of blocking a specific UE from using the search space by other UEs. When a UE is not scheduled in a subframe because all CCEs monitored by the UE are already occupied by other UEs scheduled in the same subframe, the UE may not experience this problem in a next subframe because the search space changes over time. For example, even though UE #1 and UE #2 have a partial overlap in their UE-specific search spaces in a given subframe, it may be expected that the overlap will change in a next subframe because the UE-specific search spaces change on a subframe basis.

According to the definition of the search space for the PDCCH described above, the common search space is defined as a preset set of CCEs because a certain group of UEs or all UEs should receive the PDCCH. In other words, the common search space does not change based on a UE identity or a subframe number. Although the common search space exists for transmission of various system messages, it may also be used to transmit control information for an individual UE. This may be used as a solution to the problem of a UE not being scheduled due to insufficient resources available for a UE-specific search space.

A search space is a set of candidate control channels including CCEs that a UE should attempt to decode at a given AL. There are several ALs each creating a group of 1, 2, 4, or 8 CCEs, and thus the UE has a plurality of search spaces. For the LTE PDCCH, the number of PDCCH candidates that the UE should monitor within a search space, defined for each AL is defined in the following table according to the 3GPP communication standard specification TS 36.213.

<Table 1>

| Search space $S_k^{(L)}$ | | | Number of PDCCH candidates $M^{(L)}$ |
|---|---|---|---|
| Type | Aggregation level $L$ | Size [in CCEs] | |
| UE-specific | 1 | 6 | fi |
| | 2 | 12 | 6 |
| | 4 | 8 | 2 |
| | 8 | 16 | 2 |
| Common | 4 | 16 | 4 |
| | 8 | 16 | 2 |

According to <Table 1>, the UE-specific search space supports ALs {1, 2, 4, 8}, for which there are {6, 6, 2, 2} PDCCH candidates, respectively. A common search space 302 supports ALs {4, 8} having {4, 2} PDCCH candidates, respectively. The reason for supporting only the ALs {4, 8} by the common search space is to enhance coverage characteristics because a system message typically needs to reach a cell edge.

DCI transmitted in the common search space is only defined in a specific DCI format such as 0/1A/3/3A/1C corresponding to system messages or purposes such as power control for a group of UEs. A DCI format with spatial multiplexing is not supported in the common search space. A DL DCI format to be decoded in a UE-specific search space depends on a transmission mode configured for a corresponding UE. Since the transmission mode is configured by radio resource control (RRC) signaling, there is no precise subframe number specified to indicate when the configuration for the UE is effective. Therefore, the UE may operate to always decode DCI format 1A regardless of the transmission mode so as not to lose communication.

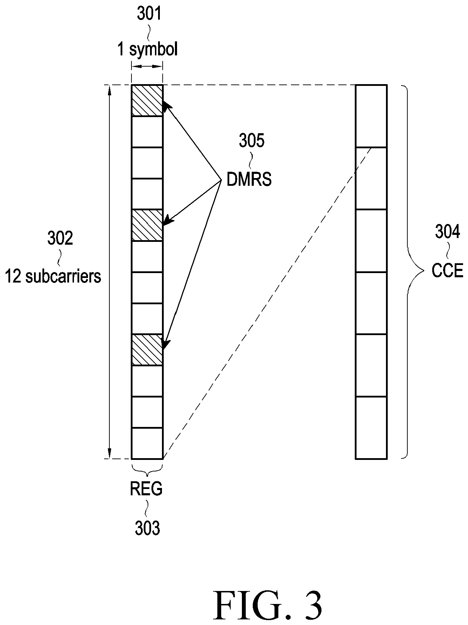

FIG. 3 is a diagram illustrating transmission resources of a DL control channel in 5G according to various embodiments of the disclosure. Specifically, FIG. 3 illustrates an exemplary basic unit of time and frequency resources included in a DL control channel available in 5G. Referring to FIG. 3, a basic unit (an REG) of time and frequency resources for a control channel includes one OFDM symbol 301 on the time axis and 12 subcarriers 302, that is, one RB on the frequency axis. The assumption of one OFDM symbol 301 as a basic time-axis unit in configuring a basic unit of a control channel may enable time-multiplexing between a data channel and a control channel in one subframe. As the control channel precedes the data channel, the resulting reduction of a processing time for the user facilitates meeting latency requirements. The configuration of a basic frequency-axis unit for the control channel as one RB 302 may enable more efficient frequency multiplexing between the control channel and the data channel.

Referring to FIG. 3, various sizes of control channel regions may be configured by concatenating REGs 303. For example, when a basic unit allocated to a DL control channel in 5G is a CCE 304, one CCE 304 may include multiple REGs 303. Referring to FIG. 3, for example, when 12 REs are available as an REG 303 and one CCE 304 includes 6 REGs 303, this implies that one CCE 304 may include 72 REs. When a DL control region is configured, it may include a plurality of CCEs 304, and a specific DL control channel may be mapped to and transmitted in one or more CCEs 304 according to an AL within the control region. The CCEs 304 in the control region may be distinguished by their numbers, which may be assigned according to a logical mapping scheme.

Referring to FIG. 3, an REG 303 may include both REs to which DCI is mapped and an area to which an RS for decoding the DCI, demodulation reference signal (DMRS) 305 is mapped. For example, the DMRS 305 may be transmitted in six REs within one REG 303. Since the DMRS 303 is transmitted by the same precoding as a control signal mapped to the REG 303, the UE may decode the control information without information about the precoding applied by a BS.

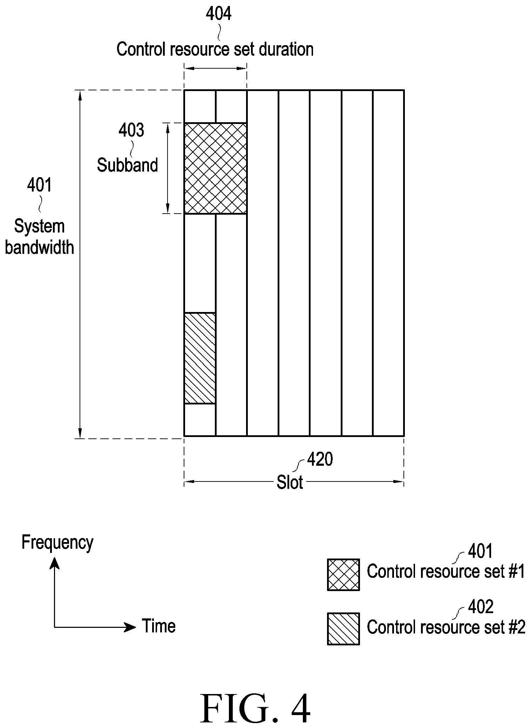

FIG. 4 is a diagram illustrating an exemplary configuration for a control region in a 5G wireless communication system according to various embodiments of the disclosure. Specifically,

FIG. 4 illustrates an example of a control resource set (CORESET) in which a DL control channel is transmitted. Referring to FIG. 4, two control regions (control region #1 401 and control region #2 402) may be configured in a system bandwidth 410 on the frequency axis and in one slot 420 on the time axis. Referring to FIG. 4, it is assumed that one slot includes 7 OFDM symbols. The control regions 401 and 402 may be configured as a specific subband 403 in a total system bandwidth 410 on the frequency axis. One or more OFDM symbols may be configured on the time axis, which may be defined as a control resource set duration 404. Referring to FIG. 4, control region #1 401 is set to a control region length of two symbols, and control region #2 402 is set to a control region length of one symbol.

Referring to FIG. 4, a control region in 5G may be configured for a UE through higher layer signaling (e.g., system information, a master information block (MIB), or RRC signaling) by a BS. Configuring a control region for a UE may mean providing information such as the location of the control region, a subband, resource allocation of the control region, the length of the control region, and the like. For example, the information may include information disclosed in Table 2.

<Table 2> [87]

| |
|---|
| Configuration information 1. frequency-axis RB allocation information<br>Configuration information 2. starting symbol of control region |
| Configuration information 3. symbol length of control region<br>Configuration information 4. REG bundling size (2 or 3 or 6)<br>Configuration information 5. transmission mode (interleaved transmission scheme or non-interleaved transmission scheme)<br>Configuration information 6. DMRS configuration information (precoder granularity)<br>Configuration information 7. search space type (common search space, group-common search space,, UE-specific search space)<br>Configuration information 8. DCI format to monitor in corresponding control region<br>Others |

In addition to the above configuration information, various other information required to transmit the DL control channel may be configured for the UE.

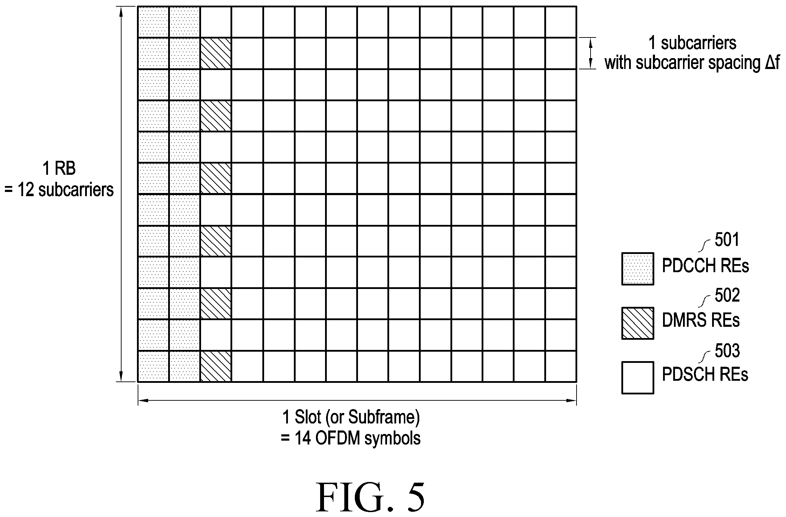

FIG. 5 is a diagram illustrating an exemplary DL RB structure in 5G according to various embodiments of the disclosure. Referring to FIG. 5, scheduling information for a physical uplink shared channel (PUSCH) or a physical downlink shared channel (PDSCH) is transmitted in DCI from a BS to a UE in a 5G system. The UE may monitor a fallback DCI format and a non-fallback DCI format for the PUSCH or the PDSCH. The fallback DCI format may include fixed fields between the BS and the UE, whereas the non-fallback DCI format may include configurable fields.

For example, fall-back DCI that schedules the PUSCH may include information disclosed in Table 3.

<Table 3>

- Identifier for DCI formats - [1] bit
- Frequency domain resource assignment - $\lceil \log_2(N_{RB}^{UL,BWP}(N_{RB}^{UL,BWP}+1)/2) \rceil$ bits
- Time domain resource assignment - X bits
- Frequency hopping flag - 1 bit.
- Modulation and coding scheme - [5] bits
- New data indicator - 1 bit
- Redundancy version - [2] bits
- HARQ process number - [4] bits
- TPC command for scheduled PUSCH - [2] bits
- UL/SUL indicator - 0 or 1 bit

For example, non-fallback DCI that schedules the PUSCH may include information disclosed in Table 4.

<Table 4>

```
- Carrier indicator - 0 or 3 bits
- Identifier for DCI formats - [1] bits
- Bandwidth part indicator - 0, 1 or 2 bits
- Frequency domain resource assignment
  • For resource allocation type 0, ⌈N_RB^{UL,BWP}/P⌉ bits
  • For resource allocation type 1, ⌈log₂(N_RB^{UL,BWP}(N_RB^{UL,BWP}+1)/2)⌉ bits
- Time domain resource assignment -1, 2, 3, or 4 bits
- VRB-to-PRB mapping - 0 or 1 bit, only for resource allocation type 1.
  • 0 bit if only resource allocation type 0 is configured;
  • 1 bit otherwise.
- Frequency hopping flag - 0 or 1 bit, only for resource allocation type 1.
  • 0 bit if only resource allocation type 0 is configured;
  • 1 bit otherwise.
- Modulation and coding scheme - 5 bits
- New data indicator - 1 bit
- Redundancy version - 2 bits as defined in section x.x of [6, TS38.214]
- HARQ process number - 4 bits
- 1st downlink assignment index - 1 or 2 bits
  • 1 bit for semi-static HARQ-ACK codebook;
  • 2 bits for dynamic HARQ-ACK codebook with single HARQ-ACK codebook.
- 2nd downlink assignment index - 0 or 2 bits
  • 2 bits for dynamic HARQ-ACK codebook with two HARQ-ACK sub-codebooks;
  • 0 bit otherwise.
- TPC command for scheduled PUSCH - 2 bits
- SRS resource indicator - ⌈log₂(∑_{k=1}^{L_max}(N_SRS choose k))⌉ or ⌈log₂(N_SRS)⌉ bits
  • ⌈log₂(∑_{k=1}^{L_max}(N_SRS choose k))⌉ bits for non-codebook based PUSCH transmission;
  • ⌈log₂(N_SRS)⌉ bits for codebook based PUSCH transmission.
- Precoding information and number of layers -up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 2 bits.
- beta_offset indicator - 2 bits
- DMRS sequence initialization - 0 or 1 bit
- UL/SUL indicator - 0 or 1 bit
```

For example, fallback DCI that schedules the PDSCH may include information disclosed in Table 5.

<Table 5>

```
- Identifier for DCI formats - [1] bit
- Frequency domain resource assignment -[⌈log₂(N_RB^{DL,BWP}(N_RB^{DL,BWP}+1)/2)⌉] bits
- Time domain resource assignment - X bits
- VRB-to-PRB mapping - 1 bit.
- Modulation and coding scheme - [5] bits
- New data indicator - 1 bit
- Redundancy version - [2] bits
- HARQ process number - [4] bits
- Downlink assignment index - 2 bits
- TPC command for scheduled PUCCH - [2] bits
- PUCCH resource indicator - [2] bits
- PDSCH-to-HARQ feedback timing indicator - [3] bits
```

For example, non-fallback DCI that schedules the PDSCH may include information disclosed in Table 6.

<Table 6>

```
-   Carrier indicator - 0 or 3 bits
-   Identifier for DCI formats - [1] bits
-   Bandwidth part indicator - 0, 1 or 2 bits
-   Frequency domain resource assignment
    •  For resource allocation type 0, ⌈N_RB^{DL,BWP} / P⌉ bits
    •  For resource allocation type 1, ⌈log_2(N_RB^{DL,BWP}(N_RB^{DL,BWP} + 1)/2)⌉ bits
-   Time domain resource assignment - 1, 2, 3, or 4 bits
-   VRB-to-PRB mapping - 0 or 1 bit, only for resource allocation type 1.
    •  0 bit if only resource allocation type 0 is configured;
    •  1 bit otherwise.
-   PRB bundling size indicator - 1 bit
-   Rate matching indicator - 0, 1, 2 bits
-   ZP CSI-RS trigger - X bits
For transport block 1:
 -   Modulation and coding scheme - 5 bits
 -   New data indicator - 1 bit
 -   Redundancy version - 2 bits
For transport block 2:
 -   Modulation and coding scheme - 5 bits
 -   New data indicator - 1 bit
 -   Redundancy version - 2 bits
-   HARQ process number - 4 bits
-   Downlink assignment index - 0 or 4 bits
-   TPC command for scheduled PUCCH - 2 bits
-   PUCCH resource indicator
-   PDSCH-to-HARQ_feedback timing indicator - 3 bits
-   Antenna ports - up to 5 bits
-   Transmission configuration indication - 3 bits
-   SRS request - 2 bits
-   CBG transmission information - 0, 2, 4, 6, or 8 bits
-   CBG flushing out information - 0 or 1 bit
-   DMRS sequence initialization - 0 or 1 bit
```

The DCI may be transmitted on a DL physical control channel, PDCCH after channel coding and modulation. DCI message payload is attached with a CRC, which is scrambled with an RNTI an RNTI corresponding to the identity of the UE. Different RNTIs are used depending on the purpose of the DCI message, for example, UE-specific data transmission, a power control command, or a random access response. That is, the RNTI is not transmitted explicitly but is included in CRC calculation. Upon receipt of the DCI message transmitted on the PDCCH, the UE may check the CRC using an assigned RNTI, and when the CRC check is correct, know that the message is directed to the UE.

According to an embodiment of the disclosure, DCI that schedules a PDSCH for system information (SI) may be scrambled with an SI-RNTI. For example, DCI that schedules a PDSCH for a random access response (RAR) message may be scrambled with an RA-RNTI. For example, DCI that schedules a PDSCH for a paging message may be scrambled with a P-RNTI. For example, DCI that indicates a slot format indicator (SFI) may be scrambled with an SFI-RNTI. For example, DCI that indicates transmit power control (TPC) may be scrambled with a TPC-RNTI. For example, DCI that schedules a UE-specific PDSCH or PUSCH may be scrambled with a cell RNTI (C-RNTI).

Referring to FIG. 5, when a specific UE is scheduled for a data channel, for example, a PUSCH or a PDSCH by a PDCCH, data is transmitted and received with a DMRS in a corresponding scheduled resource area.

Referring to FIG. 5, it is shown that a specific UE is configured to use 14 OFDM symbols as one slot (or subframe) on DL, with a PDCCH transmitted in first two OFDM symbols 501 and a DMRS transmitted in a third symbol 502. In a specific RB in which the PDSCH is scheduled, the PDSCH may be transmitted with data mapped to REs carrying no DMRS in the third symbol and REs in the following fourth to last symbols 503. According to an embodiment of the disclosure, a subcarrier spacing $\triangle$f is 15kHz in the LTE/LTE-A system and one of {15, 30, 60, 120, 240, 480}kHz in the 5G system.

According to various embodiments of the disclosure, to measure a DL channel state in a wireless communication system, a BS needs to transmit an RS. In the case of the 3GPP LTE-A system, a CRS or CSI-RS transmitted by a BS allows a UE to measure a channel state between the BS and the UE. The channel state should be measured in consideration of various factors, which may include DL interference. The DL interference includes an interference signal and thermal noise generated by an antenna belonging to a neighboring BS, and is important for the UE to determine the DL channel state. For example, when a BS with a single transmission antenna transmits a signal to a UE with a single reception antenna, the UE should determine Es/Io by determining energy per symbol receivable on DL from an RS received from the BS and interference to be received simultaneously in a period in which a corresponding symbol is received. The determined Es/Io is converted to a data rate or its equivalent value and transmitted to the BS in the form of a channel quality indicator (CQI), which may be used to determine a data rate at which the BS should transmit to the UE.

According to various embodiments of the disclosure, in the case of the LTE-A system, the UE may feed back DL channel state information to the BS so that the BS uses the DL channel state information for DL scheduling. For example, the UE measures an RS transmitted on DL by the BS and feeds back information extracted from the measurement to the BS in a form defined by the LTE/LTE-A standard. As described above, the information fed back by the UE in LTE/LTE-A may be referred to as channel state information, which may include the following three types of information.

Rank indicator (RI): The number of spatial layers that a UE is capable of receiving in a current channel state.

Precoding matrix indicator (PMI): An indicator of a precoding matrix that a UE prefers to use in a current channel state.

Channel quality indicator (CQI): A maximum data rate at which a UE is capable of receiving in a current channel state.

The CQI may be replaced by a signal to interference plus noise ratio (SINR) which may be used similarly to a maximum data rate, a maximum error correction code rate and modulation scheme, data efficiency per frequency, and so on.

According to various embodiments of the disclosure, an RI, a PMI, and a CQI included in channel state information have meanings in correlation with each other. For example, because a precoding matrix supported in LTE/LTE-A is defined differently for each rank, a PMI value X may be interpreted differently when the RI has a value of 1 and when the RI has a value of 2.

According to various embodiments of the disclosure, when the UE determines a CQI, it assumes that a PMI and X that it has reported to the BS have been applied by the BS. For example, reporting RI_X, PMI_Y, and CQI_Z to the BS by the UE amounts to reporting that the UE is capable of receiving a data rate corresponding to CQI_Z, when the rank is RI_X and the PMI is PMI_Y. In this way, the UE assumes a transmission scheme to be performed in the BS in calculating a CQI to obtain optimized performance when actual transmission is performed in the transmission scheme.

According to various embodiments of the disclosure, the UE may feed back an RI, a PMI, and a CQI as channel state information periodically or aperiodically in LTE/LTE-A. When the BS wants to aperiodically obtain channel state information about a specific UE, the BS may configure the UE to perform an aperiodic feedback (or aperiodic channel state information reporting) using an aperiodic feedback indicator (or channel state information request field or channel state information request information) included in DCI for the UE. Further, when receiving an indicator set to indicate an aperiodic feedback in an $n^{th}$ subframe, the UE may perform UL transmission by including aperiodic feedback information (or channel state information) in the data transmission in an $(n+k)^{th}$ subframe. Herein, k is a parameter defined in the 3GPP LTE Release 11 standard, which is 4 in frequency division duplexing (FDD) and may be defined in time division duplexing (TDD) as shown in [Table 7].

<Table 7> Value of k for each subframe number n in TDD UL/DL configurations [116]

| TDD UL/DL Configuration | subframe number $n$ | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | a | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

When aperiodic feedback is set, the feedback information (or channel state information) includes an RI, a PMI, and a CQI, and the RI and the PMI may not be fed back depending on a feedback configuration (or a channel state reporting configuration).

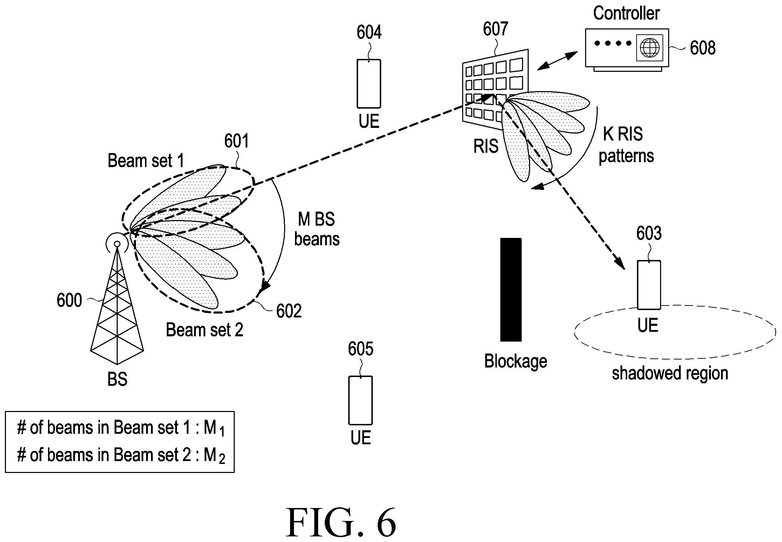

FIG. 6 is a diagram schematically illustrating a structure of a wireless communication system including a reconfigurable intelligent surface (RIS) in various embodiments of the disclosure. Referring to FIG. 6, the wireless communication system may include a BS 600, UEs 603, 604, and 605, an RIS 607, and an RIS controller 608. The disclosure proposes a technique for managing a BS beam and an RIS pattern (RP) in an RIS-based wireless communication system. According to various embodiments of the disclosure, the RP may be managed by setting a phase value or a reflection pattern for an RIS element, which is a basic unit of the RIS 607. Referring to FIG. 6, the RIS 607 may be controlled by the RIS controller 608.

Various embodiments of the disclosure include a method of transmitting SSBs to the UEs 603, 604, and 605 on DL by the BS 600 after the BS 600 specifies beams of the BS 600 and RPs of the RIS 607 to perform beam sweeping in a beam establishment operation before the BS 600 is connected to the UEs 603, 604, and 605, a method of applying RP values of the RIS 607 when the BS 600 transmits SSBs to the UEs 603, 604, and 605 on DL by the BS 600, a method of applying RP values of the RIS 607 when the UEs 603, 604, and 605 measure signal strengths (RSRPs) of the SSBs received from the BS 600 and then transmit physical random access channels (PRACHs) to the BS, and a method of managing beams of the BS 600 and RPs of the RIS 607 using a CSI-RS after the BS 600 is connected to the UEs 603, 604, and 605.

Referring to FIG. 6, it illustrates a cell with a BS managing M beams and the RIS 607 with K possible RP values to support the UE 603 located in a shadowed area. Signals 601 transmitted through M1 beams out of M beams of the BS 600 may be transmitted toward the RIS 607 and reflected by the RIS 607, while signals 602 transmitted through remaining M2 beams may not be directed toward the RIS 607 and thus may not be reflected by the RIS 607. Various embodiments of the disclosure include a method of managing beams of the BS 600 and RP values of the RIS 607 in a situation where the UE 603 is located in a shadowed area, the UE 604 is located between the BS 600 and the RIS 607, and the UE 605 is located at a position where no object causing communication impairment is present between the BS 600 and the UE 605.

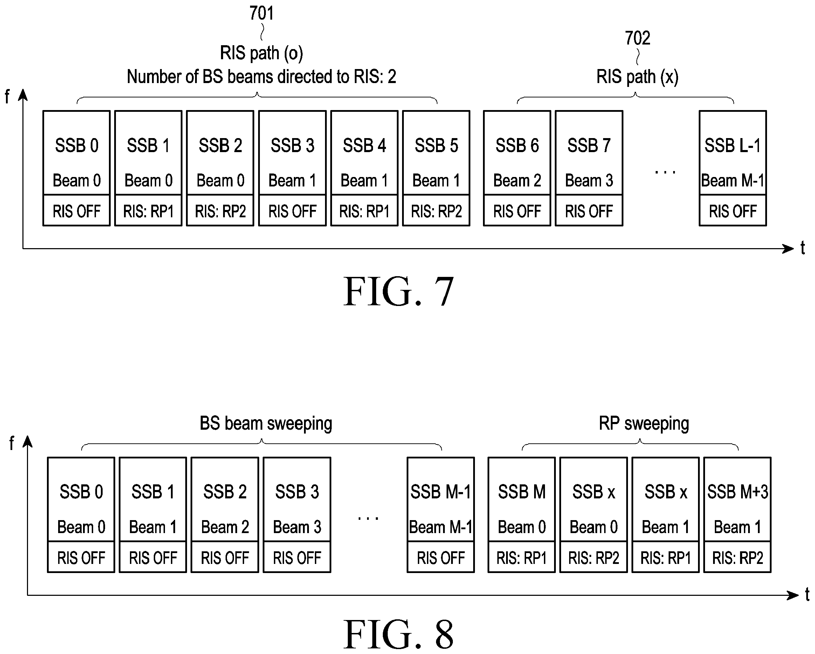

FIG. 7 is a diagram illustrating SSBs used for UEs at various locations to perform a beam establishment procedure with a BS in a wireless communication system according to various embodiments of the disclosure. FIG. 7 illustrates a method of directly applying an RP value of the RIS 607 set by the BS 600 by the RIS controller 608 according to various embodiments of the disclosure.

Referring to FIG. 7, it illustrates a method of transmitting an SSB to which a combination of a beam of the BS 600 and an RP of the RIS 607 is mapped by the BS, so that the UEs 603, 604, and 605 at various locations perform an initial beam establishment procedure with the BS in the RIS-based wireless communication system illustrated in FIG. 6. Referring to FIG. 7, it is assumed that the number of beams of the BS 600 directed to the RIS 607 is 2 (M1=2) and an RP value applicable by the RIS 607 is 3 (K=3).

Referring to FIG. 7, each of Beam 0 and Beam 1 of the BS 600 directed to the RIS 607 is repeated K (=3) times and mapped with the RPs of the RIS 607 to SSBs. For example, each SSB (e.g., SSB 0 to SSB 5) may be transmitted at an angle corresponding to each beam by beamforming. For example, RP value "OFF" of the RIS 607, RP value "1" of the RIS 607, and RP value "2" of the RIS 607 may be mapped to SSB 0, SSB 1, and SSB 2 on Beam 0 of the BS. In addition, RP value "OFF" of the RIS 607, RP value "1" of the RIS 607, and RP value "2" of the RIS 607 may be mapped to SSB 3, SSB 4, and SSB 5 on Beam 1 of the BS. In the same manner as Beam 0 and Beam 1, Beam 2 of the BS may also be mapped to SSBs in combination with the RIS RPs.

According to various embodiments of the disclosure, each SSB may be mapped with an RP value of the RIS 607, and the RP values of the RIS 607 may include a "RIS OFF" mode in which an SSB signal is not reflected but absorbed. For example, SSBs 6 to SSB L-1 may be mapped to beams of the BS 600 that are not directed to the RIS 607 and transmitted at angles corresponding to the respective beams. Herein, the RP value of the RIS 607 may be mapped as the "OFF" mode. For example, the mode in which an SSB signal is not reflected but absorbed may be used for the UE 605 located between the BS 600 and the RIS 607.

FIG. 8 is a diagram illustrating SSBs used for UEs at various locations to perform a beam establishment procedure with a BS in a wireless communication system according to various embodiments of the disclosure. Referring to FIG. 8, it illustrates a method of applying an RP value of the RIS 607 set by the BS 600 by the RIS controller 608 according to various embodiments of the disclosure.

Referring to FIG. 8, it is assumed that the number of beams of the BS 600 directed to the RIS 607 is 2 (M1=2) and an RP value applicable by the RIS 607 is 3 (K=3).

Referring to FIG. 8, SSB0 to SSB M-1 may be mapped to beams 0 to beam M-1 managed by the BS 600 and sequentially transmitted at angles corresponding to the respective beams of the BS 600 by beamforming. Herein, the RP value of the RIS 607 may be mapped as the "OFF" mode. For example, a beam sweeping procedure may be performed by mapping SSB 0 to SSB M-1 to beam 0 to beam M-1 managed by the BS 600. Since the RPs of the RIS 607 may not be used in the beam sweeping procedure, the "OFF" mode may be mapped to each SSB as the RP value of the RIS 607.

Referring to FIG. 8, SSB M to SSB M+3, except for SSB0 to SSB M-1 used in the beam sweeping procedure, may be repeated K-1 (e.g., 3) times on beam 0 and beam 1 of BS 600 directed to the RIS 607, mapped with different RP values of the RIS 607 (e.g., {(beam 0, RP 1), (beam 0, RP 2), (beam 1, RP 1), (beam 1, RP 2)}), and transmitted at angles corresponding to the beams of the BS 600 by beamforming. According to an embodiment of the disclosure, when a fixed beam is used as a BS beam, it is also possible to perform the beam establishment procedure with the BS by mapping the RP values of the RIS 607 to SSBs.

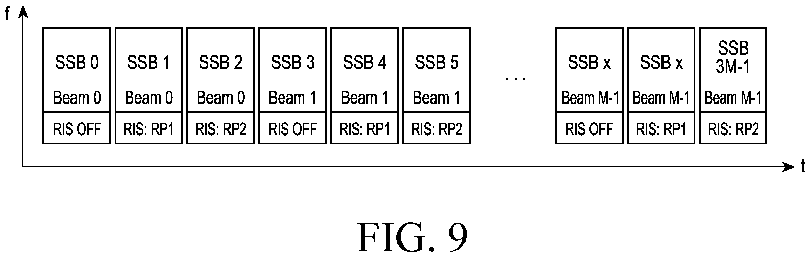

FIG. 9 is a diagram illustrating SSBs used for UEs at various locations to perform a beam establishment procedure with a BS in a wireless communication system according to various embodiments of the disclosure.

Referring to FIG. 9, it illustrates SSBs used for UEs at various locations to perform a beam establishment procedure with a BS in a wireless communication system according to various embodiments of the disclosure. Referring to FIG. 9, it is assumed that the number of beams of the BS 600 directed to the RIS 607 is 2 (M1=M) and an RP value applicable by the RIS 607 is 3 (K=3).

Referring to FIG. 9, all of beam 0 to beam M-1 managed by the BS 600 may be mapped to respective SSBs in combination of K (=3) different RP values of the RIS 607 and transmitted at angles corresponding to the beams of the BS 600 by beamforming.

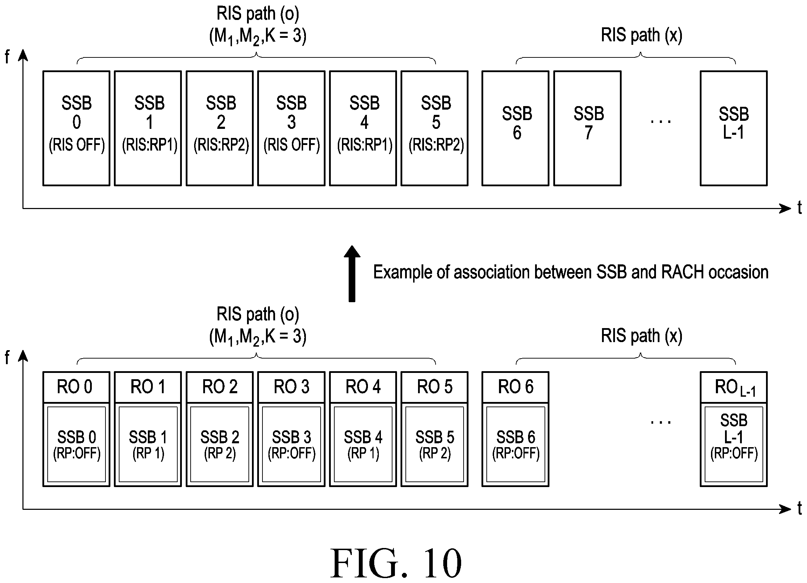

FIG. 10 is a diagram illustrating SSBs used for UEs at various locations to perform an RACH procedure with a BS in a wireless communication system according to various embodiments of the disclosure.

As described before with reference to FIGS. 7 to 9, the BS 600 may transmit SSBs to the UEs 603, 604, and 605 located at various locations by mapping beams of the BS 600 to the SSBs, respectively.

According to various embodiments of the disclosure, the UEs 603, 604, and 605 located at various locations may select SSBs with largest received power strengths (RSRPs) from among the received SSBs and perform the random access procedure with the BS 600 accordingly.

Referring to FIG. 10, it illustrates RP values of the RIS 607 that the BS 600 should transmit to the RIS controller, for specific RACH occasions (ROs), so that the UEs 603, 604, and 605 at various locations may measure the received signal strengths (e.g., L1-RSRPs) of L SSBs and transmit random access preambles on UL in ROs associated with SSBs with largest measured received signal strengths.

Because a beam of the BS 600 and a beam of the UE 604 have been determined, it may be noted that an optimal RP value of the RIS 607 set for DL transmission by the BS is the same as an optimal RP value of the RIS 607 to be set for reception of a UL signal transmitted by the UE 604. For example, when the BS 600 is in a specific RO, the UE 604 may set an RP value of the RIS 607 mapped to an SSB received from the BS 600 as an RP value of the RIS 607 used for an SSB transmitted to the BS.

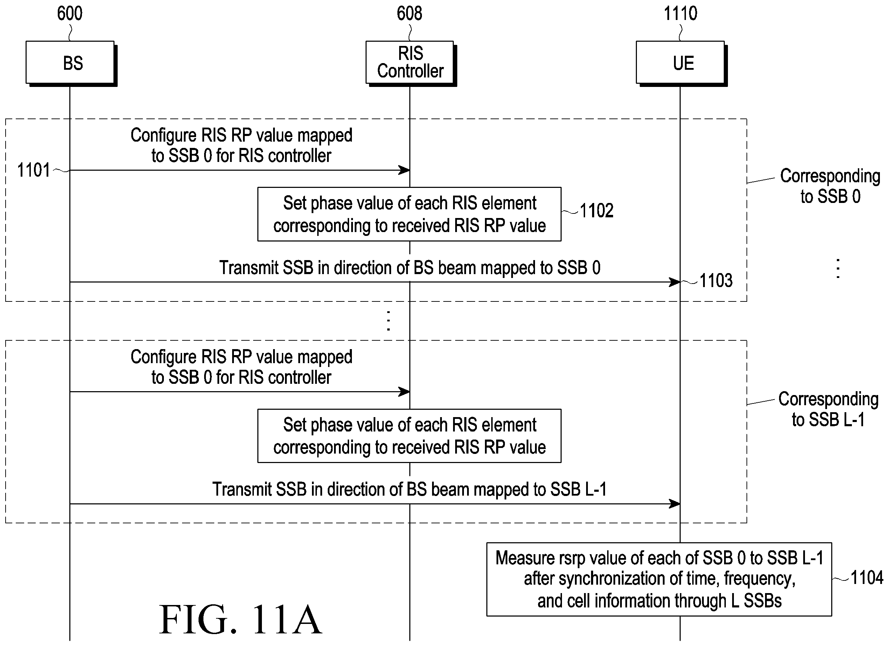

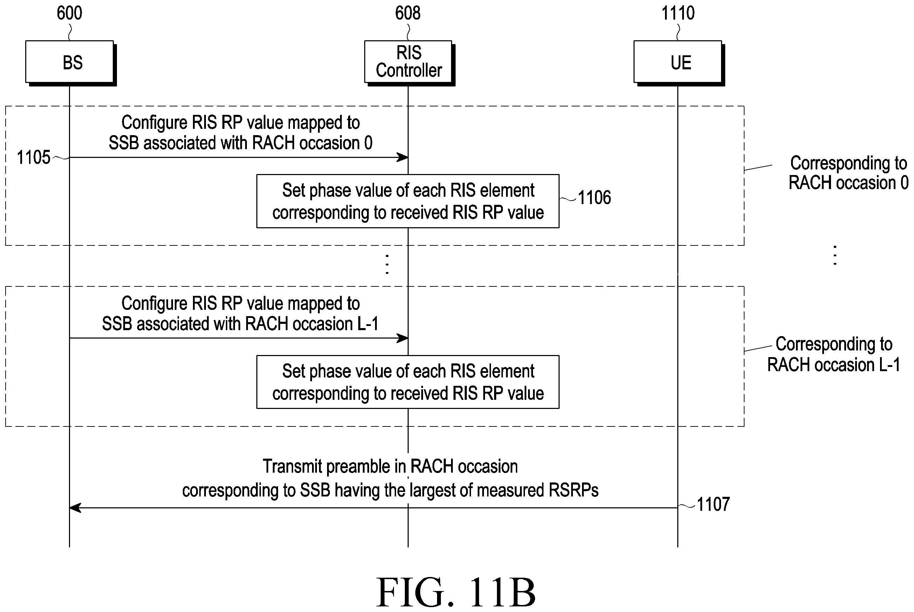

FIGS. 11A and 11B are a flowchart illustrating a method of performing a beam establishment procedure between a BS and a UE through an RIS according to various embodiments of the disclosure.

Referring to FIGS. 11A and 11B, they illustrate an initial beam establishment procedure between the BS 600 and a UE 1100 through an SSB in a situation where the BS 600 and the RIS controller 608 transmit an RP value of the RIS 607 in real time without time synchronization (e.g., the BS and the RIS controller 608 may communicate by wireless or wired communication (e.g., Wi-Fi, Bluetooth, wired communication, and so on.)).

Before operation 1101, at least one of the BS 600, the RIS controller 608, or the UE 1110 may perform an algorithm of determining an optimal RIS location.

An optimal RIS location for the UE 1110 may be determined based on at least one of an optimal distance between the UE and the RIS, a bearing angle of the RIS, or maximum received power of the UE. Herein, the maximum received power of the UE may be signal power received by the UE after a signal transmitted by the BS is reflected from the RIS.

According to an embodiment, the optimal distance between the UE and the RIS may be determined based on RIS height information and UE height information.

According to an embodiment, the bearing angle of the RIS may be calculated for each of candidate locations of the RIS, which are away from the UE by the optimal distance.

According to an embodiment, the received power of the UE may be calculated for each of the candidate locations of the RIS, which are away from the UE by the optimal distance. According to an embodiment, the maximum received power of the UE may be a maximum value of received power of the UE calculated for the respective candidate locations of the RIS.

According to an embodiment, a candidate location of the RIS having an optimal RIS bearing angle and the maximum US received power among the candidate locations of the RIS, which are away from the UE by the optimal distance may be determined as the location of the RIS.

The BS 600 transmits configuration information including an RP value of the RIS 607 mapped to SSB 0 to the RIS controller 608 (operation 1101). For example, the RP value of the RIS 607 is set as described before with reference to FIGS. 7 to 9. After receiving the configuration information including the RP value of the RIS 607, the RIS controller 608 sets a phase value of each RIS element corresponding to the RP value of the RIS 607 included in the received configuration information (operation 1102). The BS 600 may transmit an SSB in a BS beam direction mapped to SSB 0 through the RIS 6107 (operation 1103).

According to various embodiments of the disclosure, the BS 600 and the RIS 607 may perform operations 1101 to 1103 on all L SSBs sequentially.

The UE 1100 may receive SSBs from the BS 600 and synchronize time, frequency, and cell information with the BS 600 through the received SSBs. After synchronizing time, frequency, and cell information with the BS 600 through the received SSBs, the UE 1100 may measure the received power strength (e.g., RSRP) value of each of received SSB 0 to SSB L-1 (operation 1104).

The BS may transmit configuration information including an RP value of the RIS 607 mapped to an SSB associated with RACH occasion 0 to the RIS controller 608 (operation 1105). For example, the BS may set the RP value of the RIS 607 as described with reference to FIG. 10. After receiving the configuration information including the RP value of the RIS 607 from the BS 600, the RIS controller 608 may set a phase value of each RIS element corresponding to the RP value of the RIS 607 based on the RP of the RIS 607 in the received configuration information (operation 1106).

According to various embodiments of the disclosure, the BS 600 and the RIS 607 may perform operations 1105 and 1106 on all L ROs sequentially.

The UE 1100 may transmit a preamble to the BS 600 in an RACH occasion corresponding to an SSB having the maximum of the RSRSP values of the SSBs measured in operation 1104. When there are a plurality of RSRPs similar to the maximum of the RSRP values of the SSBs measured in operation 1104, the UE 1100 may determine that it is the UE 604 located between the BS 600 and the RIS 607 and transmit a preamble in an RO corresponding to an SSB to which RIS OFF is mapped (e.g., the UE 604 in FIG. 6).

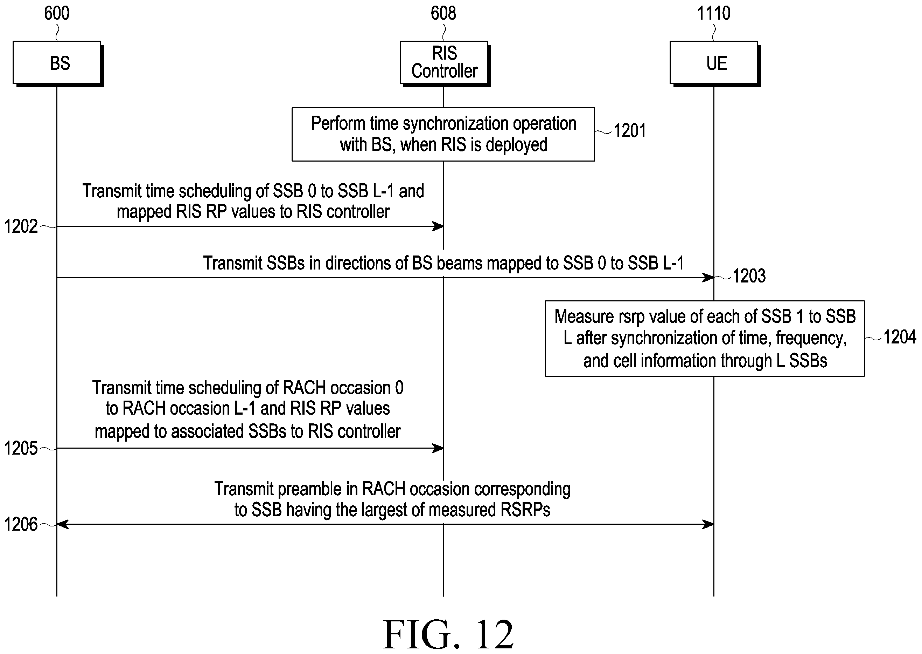

FIG. 12 is a flowchart illustrating a beam establishment procedure between the BS 600 and a UE through an SSB according to various embodiments of the disclosure. Referring to FIG. 12, the RIS controller 608 may perform a time synchronization operation with the BS 600 (operation 1201).

Referring to FIG. 12, it illustrates an initial beam establishment procedure between the BS 600 and the UE 1110 through an SSB, when the BS 600 may transmit an RP value of the RIS 607 in a scheduling signal to the RIS controller 608 through a new physical channel or interface (e.g., an L1 signal, RRC, or a MAC signal) after performing a time synchronization operation with the RIS controller 608.

The BS 600 may transmit a scheduling signal including an RP value of the RIS 607 mapped to each SSB to the RIS controller 608, as described with reference to FIGS. 7 to 9 (operation 1202). According to various embodiments of the disclosure, the RIS controller 608 may set a phase value of each RIS element corresponding to the RP value of the RIS 607 included in the received scheduling signal at a specific scheduled time.

After the RP value of the RIS 607 is set for the RIS element, the BS 600 may transmit L SSBs sequentially in directions of mapped beams of the BS 600 (operation 1203).

The UE 1110 may synchronize time, frequency, and cell information with the BS 600 based on received SSBs. After performing the synchronization operation with the BS 600, the UE 1110 may measure the RSRP value of each of SSB 0 to SSB L-1 (operation 1204).

The BS 600 may transmit a scheduling signal including an RP value of the RIS 607 mapped to an SSB associated with RACH occasion 0 to the RIS controller 608 (operation 1205). For example, the BS 600 may set the RP value of the RIS 607 as described with reference FIG. 10.

The UE 1100 may transmit a preamble to the BS 600 in an RACH occasion corresponding to an SSB having the maximum of the RSRSP values of the SSBs measured in operation 1204. When the UE 1100 has multiple RSRPs similar to the maximum of the RSRP values of the SSBs measured in operation 1204, the UE 1100 may determine that it is the UE 604 located between the BS 600 and the RIS 607, and transmit the preamble in an RO corresponding to an SSB to which RIS OFF is mapped (e.g., the UE 604 in FIG. 6).

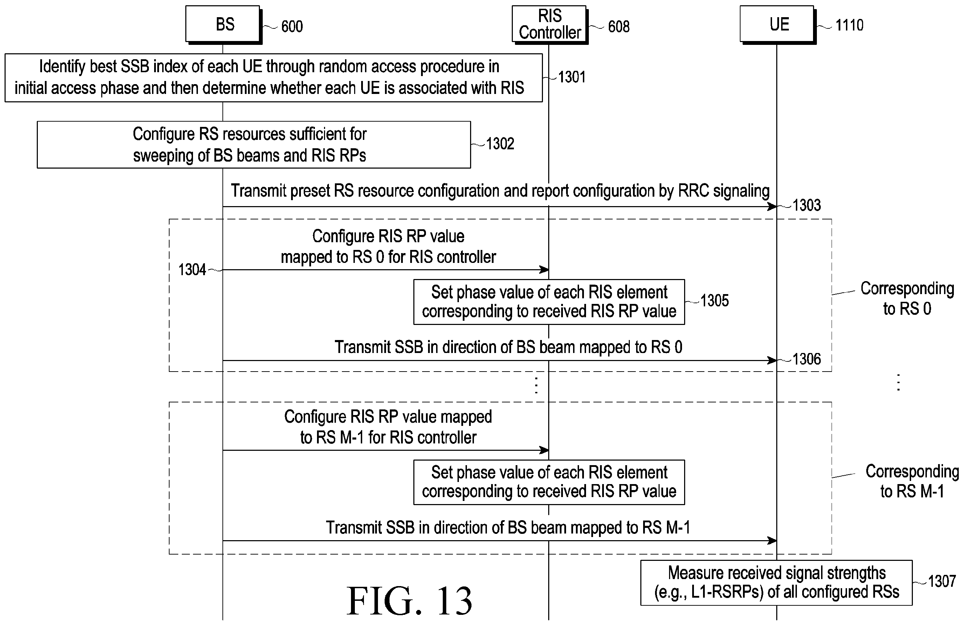

FIG. 13 is a flowchart illustrating a sequence of operations for DL beam sweeping after a BS and a UE are connected according to various embodiments of the disclosure. Referring to FIG. 13, it illustrates DL beam sweeping in a process of managing a beam of the BS 600 and an RP of the RIS 607 using an RS (e.g., a CSI-RS or an SSB), after the BS 600 and the UE 1100 are connected.

The BS 600 may determine whether each UE 1100 is associated with the RIS, after identifying a best SSB index (e.g., the index of an SSB with a largest RSRP among received SSBs) of each UE 1100 through a random access procedure during an initial access phase (operation 1301).

After determining whether each UE 1100 is associated with the RIS, the BS 600 may configure as many RS (e.g., CSI-RS) resources as the number of beams of the BS 600 to perform beam sweeping based on the determination and the number of RPs of the RIS 607 (operation 1302).

According to an embodiment, at least one of the BS 600, the RIS controller 608, or the UE 1110 may perform an algorithm of determining an optimal RIS location between operations 1301 and 1302.

An optimal RIS location for the UE 1110 may be determined based on at least one of an optimal distance between the UE and the RIS, a bearing angle of the RIS, or maximum received power of the UE. The maximum received power of the UE may be the power of a signal which is transmitted by the BS, reflected by the RIS, and received by the UE.

According to an embodiment, the optimal distance between the UE and the RIS may be determined based on RIS height information and UE height information.

According to an embodiment, the bearing angle of the RIS may be calculated for each of candidate locations of the RIS, which are away from the UE by the optimal distance.

According to an embodiment, the received power of the UE may be calculated for each of the candidate locations of the RIS, which are away from the UE by the optimal distance. According to an embodiment, the maximum received power of the UE may be the maximum of received power of the UE calculated for the respective candidate locations of the RIS.

According to an embodiment, a candidate location of the RIS having the optimal RIS bearing angle and the maximum US received power among the candidate locations of the RIS, which are away from the UE by the optimal distance, may be determined as the location of the RIS.

The BS 600 may transmit a preset RS resource configuration and report configuration to the UE 1100 by RRC signaling (operation 1303). According to various embodiments of the disclosure, an RP value of the RIS 607 set during the initial access phase may be maintained.

When RIS RP sweeping is present among the preset RS resources, a mapped RIS RP value may be configured for or transmitted to the RIS controller (operation 1304).

The BS 600 may transmit an RS in a beam direction of the BS 600 corresponding to a preset RS resource configuration (operation 1306).

The RIS controller 608 may apply the phase value of each RIS element corresponding to the RP of the RIS 607 set or transmitted by the BS 600 to RS resources configured by the BS 600 (operation 1305). The UE 1100 may measure the received signal strengths (L1-RSRPs) of all configured RSs (operation 1307).

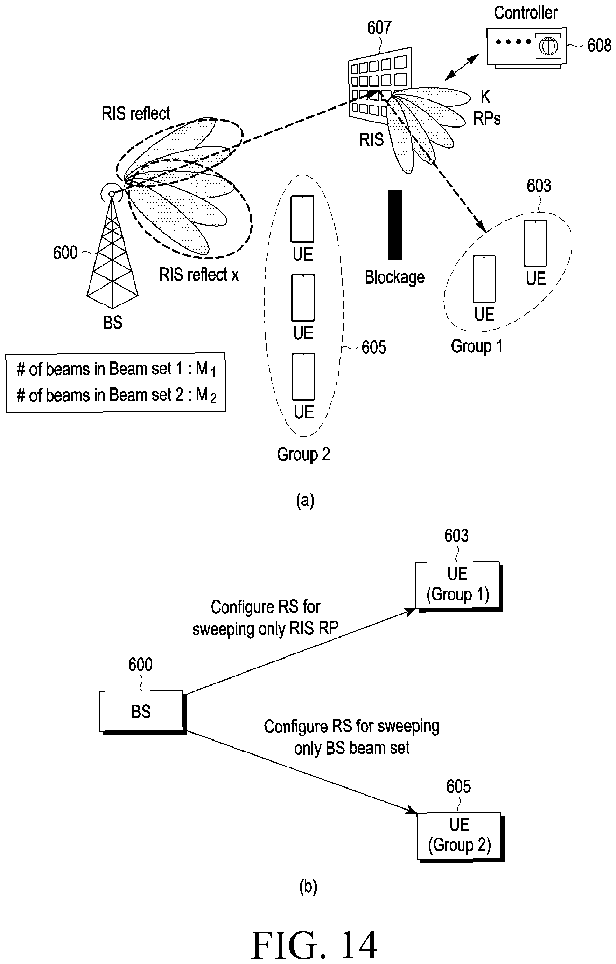

FIG. 14 is a diagram illustrating an exemplary method of configuring an RS for a UE on DL by a BS according to various embodiments of the disclosure.

Referring to FIG. 14, it illustrates an example of the method of configuring an RS for the UE 100 on DL by the BS 600 in operation 1302 of FIG. 13. In the initial access phase, the BS 600 may identify a best SSB index of each UE 1110 by a random access procedure, and then set the UE 603 determined to be connected to the RIS 607 in a first group and the UE 605 determined not to be connected to the RIS 607 in a second group using SSBs corresponding to the best SSB indexes.

The BS may configure an RS for the UE 604 belonging to the first group to perform a beam sweeping operation using an RP of the RIS 607. For example, a maximum number of RSs that the BS 600 may configure may be K * M1.

The BS 600 may configure an RS for the UE 605 belonging to the second group to perform a beam sweeping operation using a BS beam set. For example, the maximum number of RSs that the BS 600 may configure may be M (=M1+M2).

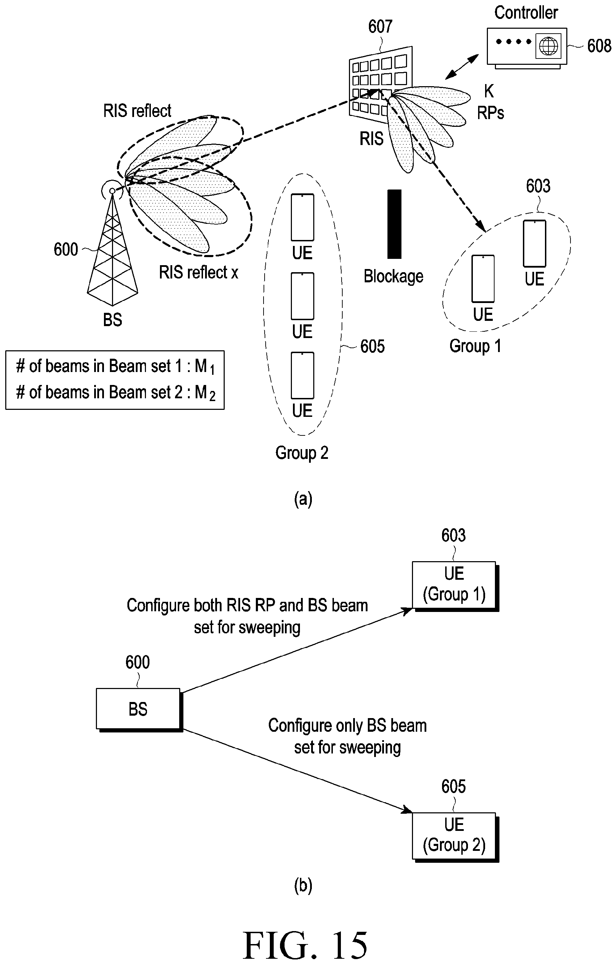

FIG. 15 is a diagram illustrating an exemplary method of configuring an RS for a UE on DL by a BS according to various embodiments of the disclosure. Referring to FIG. 15, the BS 600 may group UEs 1100 into a first group and a second group in the same manner as described with reference to FIG. 14.

The BS 600 may configure an RS for the UE 603 belonging to the first group such that a beam sweeping operation is performed using both an RP of the RIS 607 and a beam set of the BS 600. For example, the maximum number of RSs that the BS 600 may configure may be K*M1+M2.

The BS 600 may configure an RS for the UE 603 belonging to the second group such that a beam sweeping operation is performed using the beam set of the BS 600. For example, the maximum number of RSs that the BS 600 may configure may be M (=M1+M2).

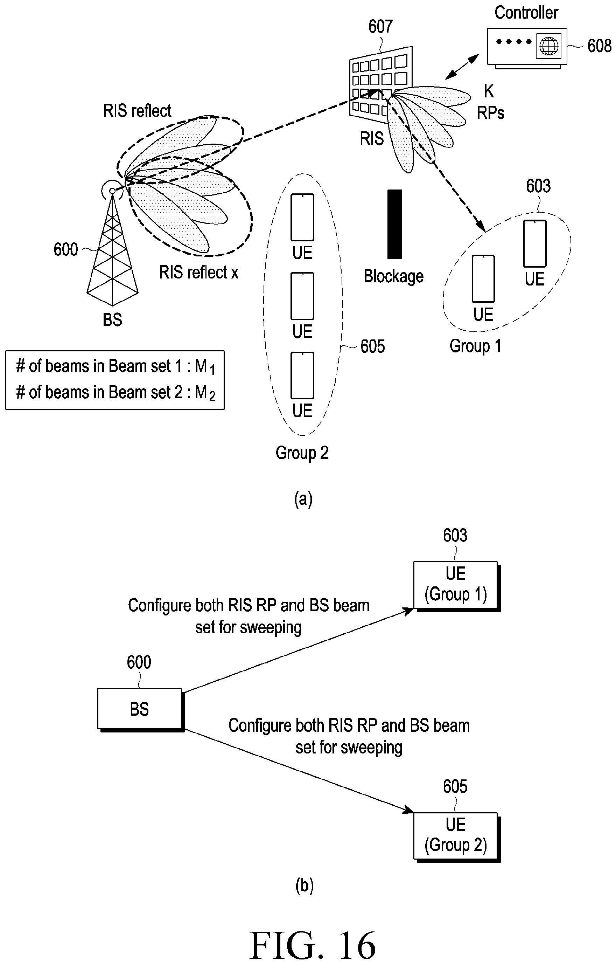

FIG. 16 is a diagram illustrating an exemplary method of configuring an RS for a UE on DL by a BS according to various embodiments of the disclosure. Referring to FIG. 16, the BS 600 may group UEs 1100 into a first group and a second group in the same manner as described with reference to FIG. 14.

Referring to FIG. 16, the BS 600 may configure an RS for the UE 603 belonging the first group and the UE 605 belonging the second group, such that beam sweeping is performed using both an RP of the RIS 607 and a beam set available for sweeping of the BS 600. For example, the maximum number of RSs that the BS 600 may configure may be K*M1+M2.

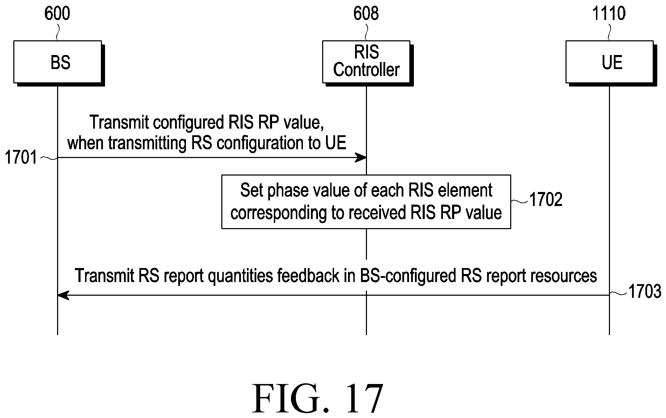

FIG. 17 is a diagram illustrating an operation of reporting an RS on UL by the UE 1100 according to various embodiments of the disclosure. Referring to FIG. 17, it illustrates an operation of reporting an RS on UL by the UE 1100 in a process of managing a beam of the BS 600 and an RP of the RIS 607 using an RS (e.g., CSI-RS or SSB), after the BS 600 and the UE 1100 are connected.

When the BS 600 transmits an RS configuration to the UE 1110, the BS 600 may configure or transmit a preset RP value of the RIS 607 for or to the RIS controller 608 (operation 1701). Based on the received RP value of the RIS 607, the RIS controller 608 may apply a phase value of each RIS element corresponding to the RP value of the RIS 607 to RS report resources configured by the BS 600 (operation 1702).

The UE 600 may feed back RS report quantities (e.g., best 4 RS indexes, a best RSRP value, or differences from the remaining 3 RSRP values, and so on) in RS report resources included in a signal transmitted by the BS 100 (operation 1703).

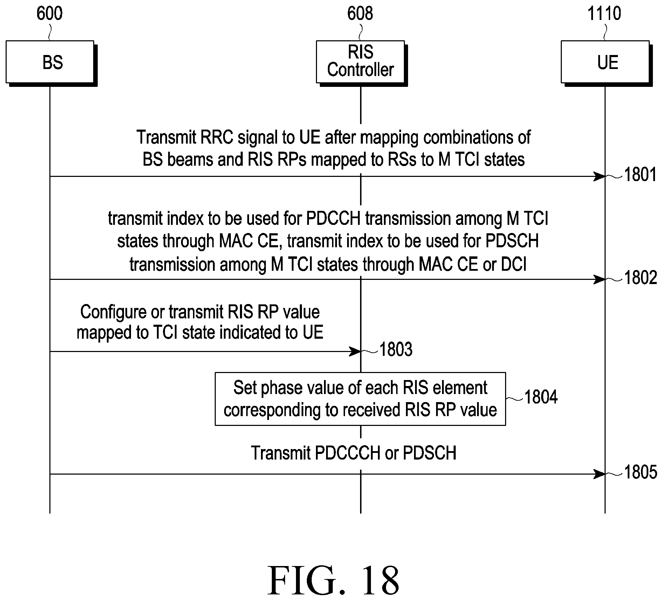

FIG. 18 is a flowchart illustrating a sequence of operations in which the BS 600 indicates information about a beam of the BS 600 and an RP of the RIS 607 to the UE 1100 on DL.

Referring to FIG. 18, it illustrates a process of indicating, to the UE 110, information about a beam of the BS 600 and an RP of the RIS 607 to be used for the BS 600 to transmit data on DL, based on RS report information fed back to the BS 600 by the UE 1100 in operation 1702 of FIG. 17.

Referring to FIG. 18, the BS 600 may map combinations of BS beams and RPs of the RIS 607 mapped to RSs to M TCI states and transmit the TCI states to the UE 1100 by an RRC signal (operation 1801).

Based on RS report information received from the UE 1100, the BS 600 may transmit a TCI state index to which a beam of the BS 600 and an RP of the RIS 607 to be used for PDCCH transmission to the UE 1100 through a MAC control element (MAC CE). According to an embodiment of the disclosure, a PDSCH transmission may be transmitted to the UE through a MAC CE or DCI of a PDCCH (operation 1802).

The BS 600 may configure or transmit an RP value mapped to the TCI state indicated to the UE 1100 for or to the RIS controller 608. According to an embodiment of the disclosure, the RIS controller 608 may apply a phase value of each RIS element corresponding to the RP value of the RIS 607, when the BS 600 transmits data on DL.

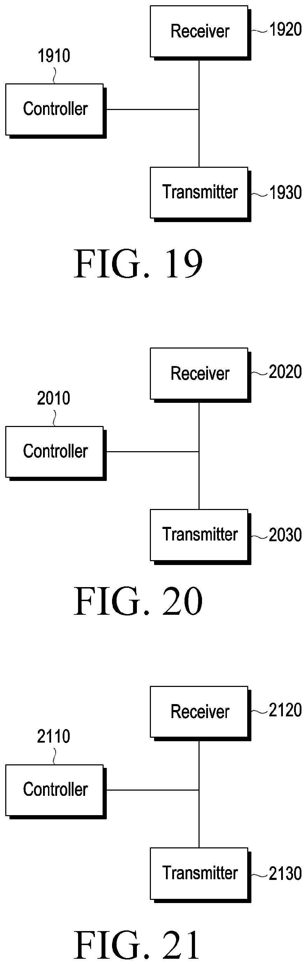

FIG. 19 is a diagram schematically illustrating an internal structure of the UE 1100 according to an embodiment of the disclosure.

Referring to FIG. 19, the UE 1100 includes a controller 1910, a receiver 1920, and a transmitter 1930.

The controller 1910 provides overall control to the operations of the UE 1100, and particularly, controls the UE 1100 to perform an operation related to beamforming control. The operation of controlling the UE 1100 by the controller 1910 is performed in the same manner as described with reference FIGS. 6 to 18, and therefore, a detailed description thereof will be omitted herein.

The receiver 1920 receives various messages, information, and so on under the control of the controller 1910.

The transmitter 1930 transmits various messages, information, and so on under the control of the controller 1910.

While the UE 1100 has the controller 1910, the receiver 1920, and the transmitter 1930 implemented as separate units in FIG. 19, at least two of the controller 1910, the receiver 1920, or the transmitter 1930 may be integrated into one unit. Furthermore, the controller 1910, the receiver 1920, and the transmitter 1930 may be implemented as at least one processor.

FIG. 20 is a diagram schematically illustrating an internal structure of the BS 600 according to an embodiment of the disclosure.

Referring to FIG. 20, the BS 600 includes a controller 2010, a receiver 2020, and a transmitter 2030. Further, the BS 600 may be implemented to include a processor for controlling beamforming and configuration information associated with an RIS RP. Further, the BS 600 may be implemented by including the functionality of the UE 1100 in a server.

The controller 2010 provides overall control to the UE 1100, and particularly, controls the UE 1100 to perform operations related to control of beamforming and configuration information associated with an RIS RP. The operation of controlling the BS 600 by the controller 2010 is performed in the same manner as described with reference to FIGS. 6 to 19, and therefore, a detailed description thereof will be omitted herein.

The receiver 2020 receives various messages, information, and so on under the control of the controller 2010.

The transmitter 2030 transmits various messages, information, and so on under the control of the controller 2010.

While the BS 600 has the controller 2010, the receiver 2020, and the transmitter 2030 implemented as separate units in FIG. 20, at least two of the controller 2010, the receiver 2020, or the transmitter 2030 may be integrated into one unit. Further, the controller 2010, the receiver 2020, and the transmitter 2030 may be implemented as at least one processor.

FIG. 21 is a diagram schematically illustrating an internal structure of the RIS controller 608 according to an embodiment of the disclosure.

Referring to FIG. 21, the RIS controller 608 includes a controller 2110, a receiver 2120, and a transmitter 2130. Further, the RIS controller 608 may be implemented to include a processor for controlling configuration information related to beamforming and RIS RPs.

The controller 2110 provides overall control to the operations of the RIS controller 608, and particularly, controls the RIS controller 608 to perform operations related to control of configuration information related to beamforming and RIS RPs. Since the operation of controlling the RIS controller 608 by the controller 2110 is performed in the same manner as described with reference to FIGS. 6 to 19, a detailed description thereof will be omitted herein.

The receiver 2120 receives various messages, information, and so on under the control of the controller 2110.

The transmitter 2130 transmits various messages, information, and so on under the control of the controller 2110.

While the RIS controller 608 is implemented with the controller 2110, the receiver 2120, and the transmitter 2130 as separate units in FIG. 21, at least two of the controller 2110, the receiver 2120, or the transmitter 2130 may be integrated into one unit. Further, the controller 2110, the receiver 2120, and the transmitter 2130 may be implemented as at least one processor.

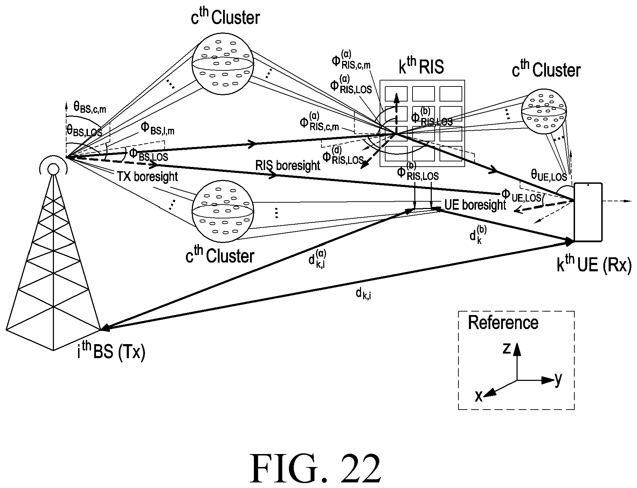

The foregoing embodiments propose techniques for indicating (or providing) pattern information of an RIS and information about a mapped SSB (or a mapped beam) by at least one of a BS or an RIS, and embodiments related to FIGS. 22 to 25 below propose techniques (or algorithms) for determining an optimal RIS location.

Specifically, the embodiments related to FIGS. 22 to 25 may be performed before operation 1101 of FIG. 11A or between operations 1301 and 1302 of FIG. 13.

FIG. 22 is a diagram illustrating a channel model among a BS, an RIS, and a UE according to various embodiments of the disclosure.

Referring to FIG. 22, the distance between an $i^{th}$ BS and a $k^{th}$ RIS on a transmitting (Tx) side may be $d_{k,i}^{(a)}$ , the distance between the $k^{th}$ RIS and a $k^{th}$ UE on a receiving (Rx) side may be $d_k^{(b)}$ , and the distance between the $i^{th}$ BS and the $k^{th}$ UE may be $d_{k,i}$. Herein, (a) may refer to a channel between the BS and the RIS, and (b) may refer to a channel between the RIS and the UE.

For simplicity of description, it is assumed that signals are transmitted and received among the $k^{th}$ BS, the $k^{th}$ RIS, and the $k^{th}$ UE.

An optimal location of the $k^{th}$ RIS for the $k^{th}$ UE may be determined based on at least one of an optimal distance between the UE and the RIS, a bearing angle of the RIS, or maximum received power of the UE. The maximum received power of the UE may be the power of a signal transmitted by the BS, reflected by the RIS, and then received by the UE.

According to an embodiment, the optimal distance between the UE and the RIS may be determined based on RIS height information and UE height information.

According to an embodiment, the bearing angle of the RIS may be calculated for each of candidate locations of the RIS, which are away from the UE by the optimal distance. According to an embodiment, the bearing angle of the RIS may be determined based on the azimuth angle of a signal received from the BS by the RIS in a global coordinate system (GCS) and the azimuth angle of a signal transmitted to the UE by the RIS in the GCS.

According to an embodiment, the received power of the UE may be calculated for each of the candidate locations of the RIS, which are away from the UE by the optimal distance. According to an embodiment, the maximum received power of the UE may be the maximum value of received power of the UE calculated for the respective candidate locations of the RIS.

According to an embodiment, the received power of the UE may be determined based on at least one of the transmission power of a transmission signal of the BS, a channel coefficient between the IS and the UE, a channel coefficient between the BS and the UE, the number of antennas in the BS, the number of antennas in the UE, the number of elements in the RIS, the distance between the BS and the RIS, the distance between the RIS and the UE, the height of the BS, the height of the RIS, the azimuth angle of a signal transmitted to the RIS by the BS relative to the location of the RIS, the azimuth angle of a signal received from the BS by the RIS relative to the location of the RIS, or the azimuth angle of a signal transmitted to the UE by the RIS relative to the location of the RIS.

According to an embodiment, a candidate RIS location having an optimal RIS bearing angle and maximum US received power among the candidate locations of the RIS, which are away from the UE by the optimal distance, may be determined as the location of the RIS.

For example, an RIS deployment algorithm proposed in the disclosure may be implemented as follows.

<RIS deployment algorithms

**Algorithm 1** The proposed RIS deployment algorithm

For user k, $k = 1, \ldots, K$
Obtain the distance $(d_k^{(b)})^{opt}$ by (11).
**while** Search over the circle $(d_k^{(b)})^{opt}$ m from user $k$ at interval of 5° **do**
    Compute the optimal bearing angle of the RIS by (15).
    Calculate the received power by (10).
**end while**
Choose the location that achieves the highest received power.

In the RIS deployment algorithm, for the $k^{th}$ user (or UE), the optimal distance $(d_k^{(b)})^{opt}$ between the $k^{th}$ RIS and the $k^{th}$ UE may be obtained based on Equation 11.

<Equation 11>

$$\frac{0.5124 d_k^{(b)}}{h_{RIS} - h_{UE}} - \tan^{-1}\left(\frac{h_{RIS} - h_{UE}}{d_k^{(b)}}\right) = 0$$

To obtain the optimal distance $(d_k^{(b)})^{opt}$ between the $k^{th}$ RIS and the $k^{th}$ UE, $d_k^{(b)}$ which satisfies Equation 11 may be detected. $d_k^{(b)}$ is the distance between the $k^{th}$ RIS and the $k^{th}$ UE, $h_{RIS}$ is the height of the RIS, and $h_{UE}$ is the height of the UE.

In the RIS deployment algorithm, an optimal bearing angle may be calculated for the RIS among the candidate locations of the RIS,

which are at a radius of $(d_k^{(b)})^{opt}$ meters of the $k^{th}$ UE at intervals of 5°.

<Equation 15>

$$\alpha_{RIS}^{opt} = (\phi_{RIS,LOS}^{(a),GCS} + \phi_{RIS,LOS}^{(b),GCS})/2$$

In Equation 15, $\alpha_{RIS}^{opt}$ is the optimal bearing angle of the RIS,

$$\phi_{RIS,LOS}^{(a),GCS}$$

is the azimuth angle of a signal received from the BS by the RIS in the GCS, and

$$\phi^{(b),\text{GCS}}_{\text{RIS},\text{LOS}}$$

is the azimuth angle of a signal transmitted to the UE by the RIS in the GCS.

In the RIS deployment algorithm, the received power of the $k^{th}$ UE may be calculated based on Equation 10.

<Equation 10>

$$
\begin{aligned}
P_{r,k} &= P_t(|g_k^{\text{LOS}}|^{\text{T}}|h_{k,k}^{\text{LOS}}|)^2 = P_t\left(\sum_{n=1}^{N}|h_{k,k,n}^{\text{LOS}}|^2|g_{k,n}^{\text{LOS}}|\right)^2 \\
&= P_t S U N^2 \text{PL}\left(d_{k,k}^{(a)}\right)\text{PL}\left(d_k^{(b)}\right) \\
&\quad A\left(f(d_{k,k}^{(a)}, h_{\text{BS}}, h_{\text{RIS}}), \phi_{\text{BS},\text{LOS}}^{(a)}\right) \\
&\quad A\left(-f(d_{k,k}^{(a)}, h_{\text{BS}}, h_{\text{RIS}}) + 180°, \phi_{\text{RIS},\text{LOS}}^{(a)}\right) \\
&\quad A\left(f(d_k^{(b)}, h_{\text{RIS}}, h_{\text{UE}}), \phi_{\text{RIS},\text{LOS}}^{(b)}\right).
\end{aligned}
$$

In Equation 10, $P_{r,k}$ may be the UE received power of a signal which is transmitted by the BS, reflected by the RIS, and then received by the UE, Pt may be the transmission power of the signal transmitted from the BS, $|g_k^{\text{LOS}}|$ may be the absolute value of a channel coefficient between the RIS and the UE, and $|h_{k,k}^{\text{LOS}}|$ may be the absolute value of a channel coefficient between the BS and the UE.

Further, $|h_{k,k,n}^{\text{LOS}}|$ and $|g_{k,n}^{\text{LOS}}|$ in Equation 10 may be determined based on Equation 9.

<Equation 9>.

$$
\begin{aligned}
|h_{k,k,n}^{\text{LOS}}| &= \sqrt{S \times \text{PL}(d_{k,k}^{(a)})}\sqrt{A(f(d_{k,k}^{(a)}, h_{\text{BS}}, h_{\text{RIS}}), \phi_{\text{BS},\text{LOS}}^{(a)})} \times \\
&\quad \sqrt{A(-f(d_{k,k}^{(a)}, h_{\text{BS}}, h_{\text{RIS}}) + 180°, \phi_{\text{RIS},\text{LOS}}^{(a)})}, \ \forall n \\
|g_{k,n}^{\text{LOS}}| &= \sqrt{U \times \text{PL}(d_k^{(b)})} \times \\
&\quad \sqrt{A(f(d_k^{(b)}, h_{\text{RIS}}, h_{\text{UE}}), \phi_{\text{RIS},\text{LOS}}^{(b)})}, \forall n,
\end{aligned}
$$

In Equation 9 and Equation 10, S may be the number of antennas in the BS, U may be the number of antennas in the UE, N may be the number of elements in the RIS, PL()may be a function of path loss, $d_{k,k}^{(a)}$ may be the distance between the $k^{th}$ BS and the $k^{th}$ RIS, $d_k^{(b)}$ may be the distance between the $k^{th}$ RIS and the $k^{th}$ UE, f() may be a function for calculating a zenith angle, and A() may be a function for processing an angle, has may be the height of the BS, $h_{RIS}$ may be the height of the RIS, $\phi_{BS,LOS}^{(a)}$ may be the azimuth angle of the signal transmitted to the RIS by the BS relative to the location of the RIS, $\phi_{RIS,LOS}^{(a)}$ may be the azimuth angle of the signal received from the BS by the RIS relative to the location of the RIS, and $\phi_{RIS,LOS}^{(b)}$ may be the azimuth angle of the signal transmitted to the UE by the RIS relative to the location of the RIS.

In the RIS deployment algorithm, the optimal location of the RIS may then be determined from among the candidate locations of the RIS at a radius of $(d_k^{(b)})^{opt}$ meters based on the optimal bearing angle of the RIS and the maximum received power of the UE.

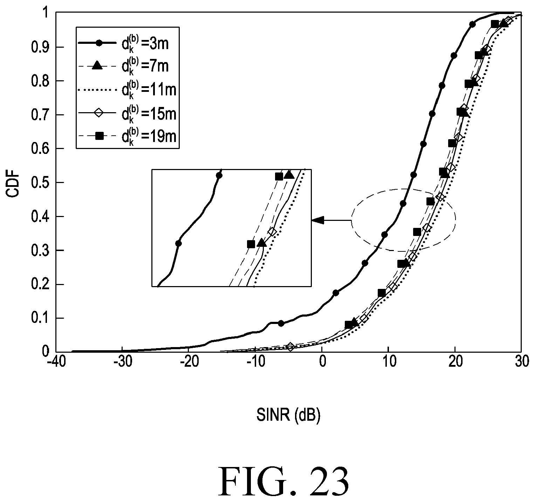

FIG. 23 is a diagram illustrating an example of SINR CDF performance according to various embodiments of the disclosure.

FIG. 23 illustrates signal-to-interference-plus-noise ratio (SINR) cumulative distribution function (CDF) performance for different values of where $d_k^{(b)}$ is the distance between the $k^{th}$ RIS and the $k^{th}$ UE.

Referring to FIG. 23, it illustrates SINR CDF performance for $d_k^{(b)}$ of 3m, 7m, 11m, 15m, and 19m.

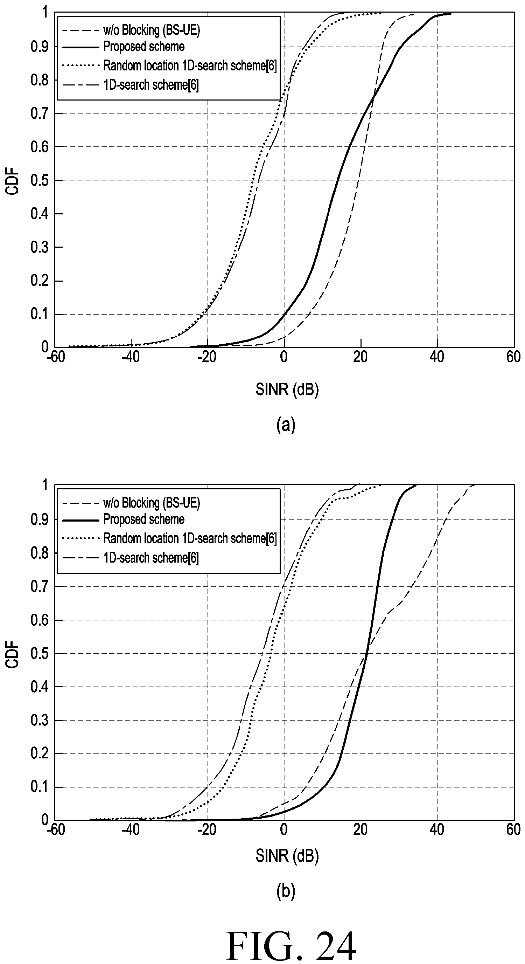

FIGS. 24A and 24B are diagrams illustrating other examples of SINR CDF performance according to various embodiments of the disclosure.

FIGS. 24A and 24B illustrate SINR CDF performance according to BS downtilt angles $\beta_{BS}$. FIG. 24A illustrates SINR CDF performance for $\beta_{BS}=0°$, and FIG. 24b illustrates SINR CDF performance for $\beta_{BS}= 12°$.

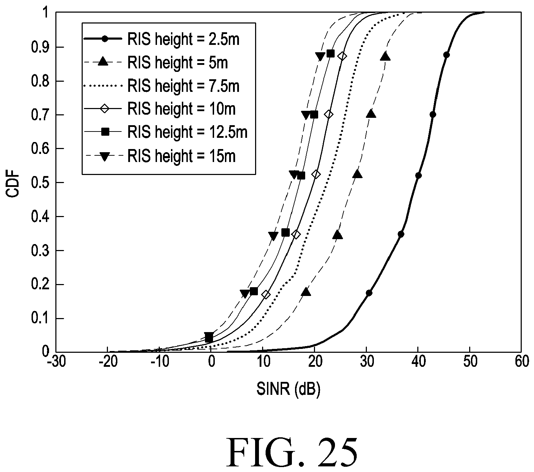

FIG. 25 is a diagram illustrating another example of SINR CDF performance according to various embodiments of the disclosure.

FIG. 25 illustrates SINR CDF performance for different RIS height values. Referring to FIG. 25, it illustrates SINR CDF performance for RIS heights of 2.5m, 5m, 7.5m, 10m, 12.5m, and 15m.

**Claims**

1. A method of supporting beamforming by a base station (BS) in a wireless communication system, the method comprising:

    mapping pattern information of a reconfiguration intelligent surface (RIS) to reflect a beam of the BS to a synchronization signal block (SSB);
    transmitting configuration information including the pattern information of the RIS to an RIS controller controlling the RIS;
    transmitting the mapped SSB to a user equipment (UE) through the RIS based on the configuration information; and
    receiving a random access preamble from the UE through the RIS.

2. The method of claim 1, wherein mapping the pattern information of the RIS to the SSB further comprises mapping a combination of the beam of the BS and the pattern information of the RIS to the SSB.

3. The method of claim 1, wherein when the UE is located between the RIS and the BS, the pattern information of the RIS is set to 'OFF'.

4. The method of claim 1, wherein mapping the pattern information of the RIS to the SSB further comprises:

    performing a synchronization operation with the RIS controller based on the SSB; and
    mapping a combination of the beam of the BS and the pattern information of the RIS to the SSB.

5. The method of claim 4, wherein the mapped SSB is transmitted through a scheduling signal.

6. A base station (BS) for supporting beamforming in a wireless communication system, comprising:

    a transceiver; and
    a controller configured to map pattern information of a reconfiguration intelligent surface (RIS) to reflect a beam of the base station to a synchronization signal block (SSB), control the transceiver to transmit configuration information including the pattern information of the RIS to an RIS controller controlling the RIS, control the transceiver to transmit the mapped SSB to a user equipment (UE) through the RIS based on the configuration information, and control the transceiver to receive a random access preamble from the UE through the RIS.

7. The BS of claim 6, wherein the controller is configured to map a combination of the beam of the BS and the pattern information of the RIS to the SSB.

8. The BS of claim 6, wherein when the UE is located between the RIS and the base station, the pattern information of the RIS is set to 'OFF'.

9. The BS of claim 6, wherein the controller is configured to perform a synchronization operation with the RIS controller based on the SSB and map a combination of the beam of the base station and the pattern information of the RIS to the SSB.

10. The BS of claim 9, wherein the mapped SSB is transmitted through a scheduling signal.

11. A method of reflecting a beam supporting beamforming by a reconfiguration intelligent surface (RIS) controller in a wireless communication system, the method comprising:

    receiving a synchronization signal block (SSB) to which pattern information of an RIS is mapped from a base station (BS);
    setting a phase value of an RIS element of the RIS based on the received SSB; and
    transmitting the SSB to a user equipment (UE) based on the phase value of the RIS element.

12. The method of claim 11, further comprising:

    receiving configuration information including an SSB index from the UE; and
    transmitting the configuration information to the BS.

13. The method of claim 11, wherein a combination of the number of beams of the BS and the pattern information of the RIS is mapped to the first SSB.

14. A reconfiguration intelligent surface (RIS) controller for reflecting a beam supporting beamforming in a wireless communication system, comprising:

    a transceiver; and
    a controller configured to control the transceiver to receive a synchronization signal block (SSB) to which pattern information of an RIS is mapped from a base station (BS), set a phase value of an RIS element of the RIS based on the received SSB, and control the transceiver to transmit the SSB to a user equipment (UE) based on the phase value of the RIS element.

15. The RIS controller of claim 14, wherein the controller is configured to control the transceiver to receive configuration information including an SSB index from the UE and control the transceiver to transmit the configuration information to the BS.

104

Radio frame

103

Subframe

102

Slot

106

Resource element

$N_{SC}^{BW}$ subcarriers

105

108

$N_{SC}^{RB}$ subcarriers

107

Resource block

$N_{symb}$ODFM symbols

101

frequency

time

# FIG. 1

FIG. 2

301

1 symbol

305

DMRS

302

12 subcarriers

304

CCE

REG

303

FIG. 3

**404**
Control resource set duration

**403**
Subband

**401**
System bandwidth

**420**
Slot

Frequency

Time

**401**
Control resource set #1

**402**
Control resource set #2

# FIG. 4

1 subcarriers
with subcarrier spacing Δf

1 RB
= 12 subcarriers

501
☐ PDCCH REs

502
▨ DMRS REs

503
☐ PDSCH REs

1 Slot (or Subframe)
= 14 OFDM symbols

FIG. 5

FIG. 6

EP 4 380 069 A1

701
RIS path (o)
Number of BS beams directed to RIS: 2

702
RIS path (x)

f

| SSB 0 | SSB 1 | SSB 2 | SSB 3 | SSB 4 | SSB 5 | SSB 6 | SSB 7 | | SSB L-1 |
|---|---|---|---|---|---|---|---|---|---|
| Beam 0 | Beam 0 | Beam 0 | Beam 1 | Beam 1 | Beam 1 | Beam 2 | Beam 3 | . . . | Beam M-1 |
| RIS OFF | RIS: RP1 | RIS: RP2 | RIS OFF | RIS: RP1 | RIS: RP2 | RIS OFF | RIS OFF | | RIS OFF |

t

# FIG. 7

BS beam sweeping

RP sweeping

f

| SSB 0 | SSB 1 | SSB 2 | SSB 3 | | SSB M-1 | SSB M | SSB x | SSB x | SSB M+3 |
|---|---|---|---|---|---|---|---|---|---|
| Beam 0 | Beam 1 | Beam 2 | Beam 3 | . . . | Beam M-1 | Beam 0 | Beam 0 | Beam 1 | Beam 1 |
| RIS OFF | RIS OFF | RIS OFF | RIS OFF | | RIS OFF | RIS: RP1 | RIS: RP2 | RIS: RP1 | RIS: RP2 |

t

# FIG. 8

EP 4 380 069 A1

f

| SSB 0 | SSB 1 | SSB 2 | SSB 3 | SSB 4 | SSB 5 | | SSB x | SSB x | SSB 3M-1 |
|-------|-------|-------|-------|-------|-------|---|-------|-------|----------|
| Beam 0 | Beam 0 | Beam 0 | Beam 1 | Beam 1 | Beam 1 | . . . | Beam M-1 | Beam M-1 | Beam M-1 |
| RIS OFF | RIS: RP1 | RIS: RP2 | RIS OFF | RIS: RP1 | RIS: RP2 | | RIS OFF | RIS: RP1 | RIS: RP2 |

t

# FIG. 9

RIS path (o)
$(M_1, M_2, K = 3)$

RIS path (x)

f

| SSB 0 (RIS OFF) | SSB 1 (RIS:RP1) | SSB 2 (RIS:RP2) | SSB 3 (RIS OFF) | SSB 4 (RIS:RP1) | SSB 5 (RIS:RP2) | SSB 6 | SSB 7 | ... | SSB L-1 |

t

Example of association between SSB and RACH occasion

RIS path (o)
$(M_1, M_2, K = 3)$

RIS path (x)

f

| RO 0 | RO 1 | RO 2 | RO 3 | RO 4 | RO 5 | RO 6 | | RO L-1 |

| SSB 0 (RP:OFF) | SSB 1 (RP 1) | SSB 2 (RP 2) | SSB 3 (RP:OFF) | SSB 4 (RP 1) | SSB 5 (RP 2) | SSB 6 (RP:OFF) | ... | SSB L-1 (RP:OFF) |

t

FIG. 10

EP 4 380 069 A1

600    608    1110

| BS | RIS Controller | UE |

**Corresponding to SSB 0**

1101 — Configure RIS RP value mapped to SSB 0 for RIS controller

1102 — Set phase value of each RIS element corresponding to received RIS RP value

Transmit SSB in direction of BS beam mapped to SSB 0 — 1103

**Corresponding to SSB L-1**

Configure RIS RP value mapped to SSB 0 for RIS controller

Set phase value of each RIS element corresponding to received RIS RP value

Transmit SSB in direction of BS beam mapped to SSB L-1

1104 — Measure rsrp value of each of SSB 0 to SSB L-1 after synchronization of time, frequency, and cell information through L SSBs

# FIG. 11A

600                                  608                                  1110

```
┌──────┐                         ┌──────────┐                         ┌──────┐
│  BS  │                         │   RIS    │                         │  UE  │
└──────┘                         │Controller│                         └──────┘
                                 └──────────┘
```

        Configure RIS RP value mapped to
        SSB associated with RACH occasion 0

1105 ─────────────────────────────────────►                                        Corresponding to
                                                                                    RACH occasion 0
                           ┌─────────────────────────────────┐
                           │ Set phase value of each RIS element │ ~1106
                           │ corresponding to received RIS RP value │
                           └─────────────────────────────────┘

                                        ⋮                                              ⋮

        Configure RIS RP value mapped to
        SSB associated with RACH occasion L-1

     ─────────────────────────────────────►                                        Corresponding to
                                                                                    RACH occasion L-1
                           ┌─────────────────────────────────┐
                           │ Set phase value of each RIS element │
                           │ corresponding to received RIS RP value │
                           └─────────────────────────────────┘

        Transmit preamble in RACH occasion
        corresponding to SSB having the largest of measured RSRPs

     ◄───────────────────────────────────────────────────────────────────────── ~1107

# FIG. 11B

```
                  600                         608                        1110

                 ┌─────┐                   ┌──────────┐              ┌─────┐
                 │ BS  │                   │   RIS    │              │ UE  │
                 └─────┘                   │Controller│              └─────┘
                                           └──────────┘

                                  ┌──────────────────────────────┐
                                  │ Perform time synchronization │
                                  │   operation with BS, when    │──1201
                                  │       RIS is deployed        │
                                  └──────────────────────────────┘

                 Transmit time scheduling of SSB 0 to SSB L-1 and
                      mapped RIS RP values to RIS controller
           1202 ──────────────────────────────────────────────►

                 Transmit SSBs in directions of BS beams mapped to SSB 0 to SSB L-1
               ──────────────────────────────────────────────────────────────►──1203

                                                         ┌──────────────────────────────┐
                                                         │ Measure rsrp value of each of │
                                                         │  SSB 1 to SSB L after         │──1204
                                                         │  synchronization of time,     │
                                                         │  frequency, and cell          │
                                                         │  information through L SSBs    │
                                                         └──────────────────────────────┘

                 Transmit time scheduling of RACH occasion 0
                  to RACH occasion L-1 and RIS RP values
                 mapped to associated SSBs to RIS controller
           1205 ──────────────────────────────────────────────►

                    Transmit preamble in RACH occasion corresponding
                        to SSB having the largest of measured RSRPs
           1206 ◄────────────────────────────────────────────────────────────────►
```

# FIG. 12

```
┌─────────┐          ┌──────────┐              ┌─────────┐
│   BS    │~600      │   RIS    │~608          │   UE    │~1110
└────┬────┘          │Controller│              └────┬────┘
     │               └─────┬────┘                   │
┌────────────────────────────────────────────┐     │         │
│ Identify best SSB index of each UE through  │~1301          │
│ random access procedure in initial access   │     │         │
│ phase and then determine whether each UE    │               │
│ is associated with RIS                      │     │         │
└────────────────────────────────────────────┘               │
┌──────────────────────────────────┐          │     │         │
│ Configure RS resources sufficient │~1302               │
│ for sweeping of BS beams and RIS RPs│        │     │         │
└──────────────────────────────────┘                        │
     │                                                │       │
     │ Transmit preset RS resource configuration and report   │
     │ configuration by RRC signaling                 │~1303  │
     │──────────────────────────────────────────────────────>│
```

Configure RIS RP value mapped to RS 0 for RIS controller — 1304

Set phase value of each RIS element corresponding to received RIS RP value — 1305

Transmit SSB in direction of BS beam mapped to RS 0 — 1306

Corresponding to RS 0

⋮

Configure RIS RP value mapped to RS M-1 for RIS controller

Set phase value of each RIS element corresponding to received RIS RP value

Transmit SSB in direction of BS beam mapped to RS M-1

Corresponding to RS M-1

Measure received signal strengths (e.g., L1-RSRPs) of all configured RSs — 1307

## FIG. 13

Controller

607

K RPs

RIS reflect

RIS

RIS reflect x

600

BS

# of beams in Beam set 1 : $M_1$
# of beams in Beam set 2 : $M_2$

UE

UE

UE

UE

Blockage

605

Group 2

603

UE

UE

Group 1

(a)

603

UE (Group 1)

Configure RS for
sweeping only RIS RP

600

BS

Configure RS for sweeping
only BS beam set

605

UE (Group 2)

(b)

FIG. 14

Controller

607

608

K
RPs

RIS reflect

RIS

603

RIS reflect x

600

BS

UE

UE

UE

Blockage

UE

UE

Group 1

# of beams in Beam set 1 : $M_1$
# of beams in Beam set 2 : $M_2$

605

Group 2

(a)

603

UE
(Group 1)

Configure both RIS RP and BS beam
set for sweeping

600

BS

Configure only BS beam
set for sweeping

605

UE
(Group 2)

(b)

# FIG. 15

(a)

(b)

FIG. 16

600                                    608                                    1110

BS                              RIS
                                Controller                              UE

1701 ~    Transmit configured RIS RP value,
          when transmitting RS configuration to UE

                              Set phase value of each RIS element         ~1702
                              corresponding to received RIS RP value

          Transmit RS report quantities feedback in BS-configured RS report resources
                                                                              ~1703

FIG. 17

600                                    608                                    1110

```
┌──────┐                          ┌────────────┐                      ┌──────┐
│  BS  │                          │    RIS     │                      │  UE  │
└──────┘                          │ Controller │                      └──────┘
                                  └────────────┘
```

Transmit RRC signal to UE after mapping combinations of
BS beams and RIS RPs mapped to RSs to M TCI states

────────────────────────────────────────────────────────▶ ~1801

transmit index to be used for PDCCH transmission among M TCI
states through MAC CE, transmit index to be used for PDSCH
transmission among M TCI states through MAC CE or DCI

────────────────────────────────────────────────────────▶ ~1802

Configure or transmit RIS RP value
mapped to TCI state indicated to UE

──────────────────────────────────▶ ~1803

┌─────────────────────────────────────────────┐
│  Set phase value of each RIS element         │ ~1804
│  corresponding to received RIS RP value      │
└─────────────────────────────────────────────┘

Transmit PDCCCH or PDSCH

────────────────────────────────────────────────────────▶ ~1805

# FIG. 18

Receiver ~1920

1910

Controller

Transmitter ~1930

FIG. 19

Receiver ~2020

2010

Controller

Transmitter ~2030

FIG. 20

Receiver ~2120

2110

Controller

Transmitter ~2130

FIG. 21

FIG. 22

FIG. 23

(a)

(b)

FIG. 24

FIG. 25

## INTERNATIONAL SEARCH REPORT

| International application No. |
|---|
| **PCT/KR2022/012841** |

**A. CLASSIFICATION OF SUBJECT MATTER**

**H04B 7/06**(2006.01)i; **H04B 7/0452**(2017.01)i; **H04W 74/00**(2009.01)i; **H04W 56/00**(2009.01)i; **H04W 48/10**(2009.01)i; **H04J 11/00**(2006.01)i

According to International Patent Classification (IPC) or to both national classification and IPC

**B. FIELDS SEARCHED**

Minimum documentation searched (classification system followed by classification symbols)

H04B 7/06(2006.01); G06K 9/62(2006.01); H04L 25/02(2006.01); H04L 5/00(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RIS(reconfiguration intelligent surface), 패턴(pattern), 동기 신호 블록 (synchronization signal block), 매핑(mapping), 랜덤 억세스 프리앰블(random access preamble)

**C. DOCUMENTS CONSIDERED TO BE RELEVANT**

| Category* | Citation of document, with indication, where appropriate, of the relevant passages | Relevant to claim No. |
|---|---|---|
| Y | SUWANDA, Nadhira Azizah et al. MURRA: Multi-UAV-Assisted RIS-Aided Random Access. 2021년도 한국통신학회 하계종합학술발표회 (KICS Summer Conference 2021). June 2021. See abstract; sections I-II; and figure 1. | 1-10 |
| Y | SULTAN, Qasim et al. Fast Beam Training Technique for Millimeter-Wave Cellular Systems with an Intelligent Reflective Surface. Sensors 2021, 21(14), 4936, 20 July 2021. See sections 2-3.1; and figures 1-2. | 1-15 |
| Y | GUO, Shuaishuai et al. Reflecting Modulation. arXiv:1912.08428v2 [eess.SP]. 14 May 2020. See sections I.A, II-II.A, IV and VI. | 1-15 |
| A | US 2021-0243812 A1 (SAMSUNG ELECTRONICS CO., LTD.) 05 August 2021 (2021-08-05) See paragraphs [0005], [0011] and [0058]-[0096]; and figure 2. | 1-15 |
| A | CN 113162876 A (SOUTHEAST UNIVERSITY) 23 July 2021 (2021-07-23) See claims 1-5. | 1-15 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 November 2022** | **01 December 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012841**

| Patent document cited in search report | | | Publication date (day/month/year) | Patent family member(s) | | | Publication date (day/month/year) |
|---|---|---|---|---|---|---|---|
| US | 2021-0243812 | A1 | 05 August 2021 | WO | 2021-157998 | A1 | 12 August 2021 |
| CN | 113162876 | A | 23 July 2021 | None | | | |

Form PCT/ISA/210 (patent family annex) (July 2022)